Europäisches Patentamt

European Patent Office

Office européen des brevets

(19)

(11) Publication number: **0 232 940 B1**

# EUROPEAN PATENT SPECIFICATION

(45) Date of publication of patent specification: **03.04.91**   (51) Int. Cl.5: **H04N 9/81, G11B 15/14**

(21) Application number: **87200141.7**

(22) Date of filing: **30.01.87**

(54) Method of recording and/or reading a video signal, for example an MAC signal, apparatus for carrying out the method, and magnetic record carrier obtained by means of the method.

(30) Priority: **03.02.86 NL 8600254**

(43) Date of publication of application:
**19.08.87 Bulletin 87/34**

(45) Publication of the grant of the patent:
**03.04.91 Bulletin 91/14**

(84) Designated Contracting States:
**AT DE FR GB IT NL**

(56) References cited:
**EP-A- 0 120 344**
**EP-A- 0 149 244**
**US-A- 4 476 501**

**NACHRICHTENTECHNISCHE ZEITSCHRIFT,
vol. 36, no. 6, June 1983, pages 382-387,
Berlin, DE; K.-P. WENDLER: "Timeplex:
Zeitmultiplex-System für terrestrische Über-
tragung und Aufzeichnung"**

(73) Proprietor: **N.V. Philips' Gloeilampenfabrieken
Groenewoudseweg 1
NL-5621 BA Eindhoven(NL)**

(72) Inventor: **de Haan, Gerard
c/o INT. OCTROOIBUREAU B.V. Prof. Holst-
laan 6
NL-5656 AA Eindhoven(NL)**

(74) Representative: **van der Kruk, Willem Leonar-
dus et al
INTERNATIONAAL OCTROOIBUREAU B.V.
Prof. Holstlaan 6
NL-5656 AA Eindhoven(NL)**

## Description

The invention relates to a method of recording and reading a video signal in/from tracks which are inclined relative to the longitudinal direction of a magnetic record carrier in the form of a tape by means of two or more write or readheads mounted on a rotatable head drum, the video signal comprising a sequence of lines with a first signal block containing a line-synchronising signal and a second signal block containing the chrominance and luminance information of the video signal, the first signal blocks containing at least one additional signal in addition to the line-synchronising signal. The invention also relates to an apparatus for recording and an apparatus for reading the video signal in/from the magnetic record carrier, for carrying out the method in accordance with the invention Further the invention relates to a magnetic record carrier obtained by means of the method.

The method of the kind defined in the opening paragraph is known from the publication "D2-MAC und die Folgen", Funkschau 18 (1985), pages 59-63. The MAC (multiplexed analogue components) signals are signals which comprise a sequence of lines with a first signal block containing the line-synchronising signal and a second signal block containing the chrominance and luminance information of the video signal. The first signal blocks further contain additional signals, for example audio signals and further data. The first signal blocks in the MAC signals generally comprise digitally encoded signal. The chrominance and luminance information in the second signal blocks generally takes the form of an analog signal. In the MAC signal one line interval has a length of 64 $\mu$s, the first signal blocks being slightly longer than 10 $\mu$s, the second signal blocks being slightly shorter than 54 $\mu$s. The publication mentions the possibility of recording MAC signals on a video recorder by first converting these signals into standard video signals, for example PAL signals, and subsequently recording the standard video signals on the magnetic record carrier.

However, the advantages of the MAC signals, such as: a higher resolution of the television picture and sound of higher quality and the (virtual) absence of chrominance and luminance crosstalk are then lost.

It is an object of the invention to provide a method and an apparatus enabling MAC signals to be recorded without losing the inherent advantages of MAC signals. To this end the invention is characterized in that during recording at least the additiona signal in a specific first signal b1ock is stored in a memory and is subsequently accommodated in one or more second signal blocks associated with one or more non-relevant lines in the video signal, after which said second signal block(s) is (are) recorded in a track on the record carrier, and in that during reading the additional signal is extracted from the relevant second signal block(s) read from the track and is stored in a memory, after which the additional signal is re-inserted into the relevant first signal block. The invention is based on the idea that MAC signals are not first converted into standard video signals but are recorded directly on the record carrier. However, this may give rise to a problem. During switching over from recording with one write head to recording with another write head (referred to as head switching) information may be lost if no special steps are taken. This is because MAC signals do not exhibit instant which recur at regular time intervals and at which no information or, conversely, at which easily predictable information is present, enabling head switching to be effected at these instants.

For a video recorder which is capable of performing a head-switching operation within 54 $\mu$s and which records at least one complete field (half a picture) between two head-switch instants there is no problem. In such a video recorder head switching may be performed at the instants at which a second signal block associated with a non-relevant line (for example the first line of each field) of the video signal is recorded.

The solution now proposed is that information which is susceptible to become lost owing to head switching is temporarily stored in a memory and as a first possibility is subsequently accommodated in one or more second signal blocks of one or more non-relevant video lines. Another possibility is that the information which may be lost as a result of head switching is temporarily stored in a memory and is subsequently accommodated in one or more other first signal blocks. A consequence of this is that the information in said other first signal blocks should first be accommodated somewhere else, for example in one or more second signal blocks. The information content of these other first signal blocks may, for example, be re-inserted in subsequent first signal blocks. The entire data stream of the first signals blocks is then, in fact, delayed and the last of the first signal blocks associated with one field is then accomodated in one or more second signal blocks associated with one or more non-relevant video lines.

Regardless of how the signals have been recorded, the process should be reversed during playback. After read-out from the tape the information in the relevant one or more second signal blocks is temporarily stored in a memory and re-inserted into said one or more first signal blocks of the video signal at the original location. A television apparatus which is capable of displaying the MAC signal thus read from the record carrier then enables all the advantages of such MAC signals to be obtained.

The two possibilities briefly indicated above will now be described in more detail hereinafter. First of all the possibility is described that the information which may become lost as a result of head switching is accommodated in one or more second signal blocks of a non-relevant video line. Such a method is characterized further in that during recording at least the additional signal in a specific first signal block, during which the change-over from recording with one write head to recording with another write head occurs, is stored in the memory and is subsequently accommodated in the relevant second signal block(s), and in that during reading at least the first signal blocks read from the tracks are delayed by a time interval T, after which the additional signal is re-inserted into the relevant first signal block.

Video recorders of type I, in which during one field only one change-over from recording with one write head to recording with another write head, is effected, i.e. a complete field (half picture) is recorded between two head switching instants, have a switching time which is several times longer than the 64 $\mu$s line period This change-over may take x (for example 4) times 64 $\mu$s and is effected during the vertical flyback. The fact that the video signal in the second signal blocks of these x ( = 4) lines is lost as a result of said change-over presents no proble, because it falls outside the picture anyway. As already stated in the foregoing, the information in the first signal blocks of these x lines should not be lost. In order to ensure this, the method of recording a video signal on a magnetic record carrier is characterized in that during recording at least the additional signals of those first signal blocks associated with the successive x lines during which a change-over is effected are stored in a memory and are subsequently accommodated in one or more specific second signal blocks associated with one or more non-relevant lines in the video signal, after which they are recorded in a track on the record carrier. Similarly, the method of reading the video signal thus recorded on the magnetic record carrier is characterized in that during reading the x additional signals are extracted from the second signal block(s) read from relevant track and are stored in a memory, in that at least the first signal blocks read from the tracks are delayed and the additional signals are re-inserted into the relevant x first signal blocks.

Video recorders of type II perform a head switch-over m (for example 4) times per field (half a picture). The switching time is generally very short (approximately 2 $\mu$s)). The change-over can be effected during the occurrence of a first signal block, so that the picture content (the information in the second signal blocks) is not affected.

In order to ensure that the information in the m first signal blocks per field is not lost the method of recording the video signal on the magnetic record carrier may be characterized in that during recording at least the additional signals of those m first signal blocks during which changing-over is effected are stored in a memory and are subsequently accommodated in one or more specific second signal blocks associated with one or more non-relevant lines in the video signal, after which they are recorded in a track on the record carrier, and the method of reading a video signal from the magnetic record carrier may be characterized in that during reading the m additional signals are extracted from the relevant second signal block(s) read from the tape and are stored in a memory, in that at least the first signal blocks read from the tracks are delayed and the m additional signals are re-inserted into the associated m first signal blocks.

The apparatus for carrying out the method of recording a video signal on a magnetic record carrier comprises

- an input terminal for receiving the video signal, and
- first switching means having an input, two or more outputs and a control input, which first switching means are constructed to couple the input to one of the outputs under the influence of a first control signal applied to the control input, the input terminal being coupled to the input of the first switching means and each output of said switching means being coupled to an associated write head, is characterized in that the apparatus further comprises a memory and second switching means, in that the memory is adapted to store the additional signal in said first signal block at the instant of switching over from recording with one write head to recording with another write head, under the influence of a control signal applied to a control input of the memory, in that for this purpose an input of the memory is coupled to the input terminal at least at the instand of switching over, in that an output of the memory is coupled to a first one of two inputs of the second switching means, which have an output coupled to the input of the first switching means, and in that the second switching means are adapted to couple one of the two inputs to the output under the influence of a third control signal applied to a control input of said second switching means in such a way that the first input is coupled to the output at the instant at which the second signal block(s) associated with the non-relevant line(s) in the video signal is (are) recorded.

Depending on whether it concerns a type I or II video recorder this apparatus may be characterized further in that the memory is adapted to store,

under the influence of the control signal applied to its control input, the additional signals of those first signal blocks associated with x successive lines during which switching over is effected, or in that the memory is adapted to store, under the influence of the control signal applied to its control input, the additional signals of those m first signal blocks during which switching over is effected.

The apparatus for carrying out the method of reading a video signal from a magnetic record carrier comprises
- two or more read heads,
- first switching means having two or more inputs, an output and a control input, which first switching means are constructed to couple one of the inputs to the output under the influence of a first control signal applied to the control input,
- an output terminal for aupplying the video signal,
is characterized in that the apparatus further comprises a memory, a delay means and second switching means, in that the memory is adapted to store under the influence of a second control signal applied to a control input of the memory the additional signal contained in the relevant second signal block(s) read from the track, in that for purpose an input of the memory is coupled to the output of the first switching means at least at the instant at which the relevant second signal block(s) is (are) read, in that at least at the instant at which the first signal blocks are read an input of the delay means is coupled to the output of the first switching means, in that outputs of the memory and the delay means are coupled respectively to a first input and a second input of the second switching means, and in that the second switching means are adapted to couple one of its two inputs to its output under the influence of a third control signal applied to a control input of said second switching means in such a way that the first input is coupled to the output during the time of switching over, delayed by the time interval T, from reading with one read head to reading with another read head.

Depending on whether the video recorder is of type I or II, this apparatus may be characterized further in that the memory is adapted to store, under the influence of the control signal applied to its control input, the x additional signals contained in the relevant second signal block(s) read from the track and in that the second switching means are adapted in such a way that during the switch-over time, delayed by the time interval T, the first input is coupled to the output or in that the memory is adapted to store, under the influence of the control signal applied to its control input, the m additional signals contained in the relevant second signal block(s) read from the track, and in that the second switching means are adapted in such a way that during a field during the m switching-over times, delayed by the time interval T, the first input is coupled to the output.

Hereinafter the other possibility will be described, namely the possibility that information of other first signal blocks than those which may be lost as a result of head switching is accommodated in one or more second signal blocks associated with a non-relevant video line.

For this, the method may be characterized further in that during recording at least the additional signal in a first signal block during which switching over from recording with one write head to recording with another write head is effected is delayed by one or more line periods and is subsequently accommodated in another first signal block and recorded on the record carrier, and in that the original additional first signal of said other first signal block is delayed and subsequently recorded on the record carrier. For use in video recorders of type I the method of recording the video signal on the magnetic record carrier may be characterized in that during recording the additional signals of those x first signal blocks associated with successive x lines during which switching over is effected are delayed by at least x line periods and are subsequently accommodated in x other first signal blocks, in that the additional signals of at least x subsequent first signal blocks of the field are stored in the memory and are subsequently accommodated in one or more second signal blocks associated with one or more non-relevant video lines. Similarly, the method of reading the video signal thus recorded from the magnetic record carrier may be characterized in that during reading the x additional signals are extracted from the relevant second signal block(s) read from the track, are stored in a memory, and are subsequently re-inserted into the relevant x subsequent first signal blocks.

For use in video recorders of type II the method of recording a video signal in a magnetic record carrier may be characterized in that during recording the additional signals of those first m signal blocks during which switching over is effected are delayed by at least one line period and are subsequently accommodated in m other first signal blocks, in that the additional signals of at least m subsequent first signal blocks of the field are stored in the memory and are subsequently accommodated in one or more second signal blocks associated with one or more non-relevant video lines, and the method of reading this video signal from the magnetic record carrier may be characterized in that during reading the m additional signals are extracted from the relevant second signal block(s) read from the track and are stored in a memory, after which the m additional signals are re-inserted into the associated m subsequent first signal blocks.

The apparatus for carrying out the method of recording the video signal in accordance with the second possibility comprises

- an input terminal for receiving the video signal.
- first switching means having an input, two or more outputs, and a control input, which first switching means are constructed to couple the input to one of the outputs under the influence of a first control signal applied to the control input, the input terminal being coupled to the input of the first switching means and each output of said switching means being coupled to an associated write head, is characterized in that the apparatus further comprises a memory and second switching means, in that the memory is constructed to store the additional signal in said other first signal block under the influence of a second control signal applied to a control input of the memory, in that at least at the instant at which a subsequent first signal block is applied to the input terminal an input of the memory is coupled to said input terminal, in that an output of the memory is coupled to a first one of two inputs of the second switching means, which have an output coupled to the input of the first switching means, and in that the second switching means are adapted to couple one of the inputs of the output under the influence of a third control signal applied to a control input of said second switching means in such a way that the first input is coupled to the output at the instant of recording of one or more second signal blocks associated with one or more non-relevant lines in the video signal.

Depending on whether it is a video recorder of type I or type II, this apparatus may be characterized further in that the memory is adapted to store the additional signals in said x subsequent first signal blocks, in that the input terminal is further coupled to an input of a delay means for delaying at least the x first signal block associated with the successive x lines during which switching over is effected, in that an output of the delay means is coupled to a first input of third switching means, which have a second input coupled to the output of the memory and an output coupled to the first input of the second switching means, and in that the third switching means are adapted to couple one of the inputs to the output under the influence of a control signal applied to a control input of the third switching means, or in that the memory is adapted to store the additional signals of said m subsequent first signal blocks, and in that the input terminal is further coupled to an input of a delay means for delaying at least the m first signal blocks during which switching over is effected, in that the output of the memory is coupled to a first input of third switching means, which have an output coupled to the first output of the second switching means, in that the delay means comprises m tappings, each tapping being coupled to an associated input of fourth switching means, which have an output coupled to a second input of the third switching means, and in that the third and the fourth switching means are adapted to couple one of the inputs to the output under the influence of a control signal applied to a control input of the third switching means and the fourth switching means respectively.

The apparatus for carrying out the method of reading the video signal in accordance with the second possibility comprises

- two or more read heads,
- first switching means having two or more inputs, an output and a control input, which first switching means are constructed to couple one of its inputs to its output under the influence of a first control signal applied to its control input,
- an output terminal for supplying the video signal,

is characterized in that the apparatus further comprises a memory and second switching means, in that the memory is constructed to store, under the influence of a second control signal applied to a control input of the memory, the additional signal accommodated in the relevant second signal block(s) read from the track, in that for this purpose at least at the instant at which the relevant second signal block(s) is (are) read an input of the memory is coupled to the output of the first switching means in that an output of the memory is coupled to a first one of two inputs of the second switching means, whose output is coupled to the output terminal, and in that the second switching means are adapted to couple one of the inputs to the output under the influence of a control signal applied to a control input of said second switching means in such a way that the first input is coupled to the output at the instant at which the additional signal is inserted into the relevant subsequent first signal block.

Depending on whether it is a video recorder of type I or type II, this apparatus may be characterized further in that the memory is adapted to store the x additional signals accommodated in the relevant second signal block(s) read from the track, and in that the second input is coupled to the output of the first switching means, or in that the memory is adapted to store the m additional signals accommodated in the relevant second signal block(s) read from the track, in that the apparatus further comprises a delay means, third switching means and fourth switching means, in that the output of the first switching means is coupled both to the second input of the second switching means and to an input of a delay means, in that the output of the memory is coupled to a first input of the third switching means, whose output is coupled to the first input of the second switching means, and in that the delay means comprises m tappings, each tapping being coupled to an associated input of the fourth switching means, which have an output coupled to the second input of the third switching means, and in that the third switching means and the fourth switching means are adapted to couple one of the inputs to the output under the influence of a control signal applied to a control input of the third switching means and the fourth switching means respectively.

Embodiments of the invention will now be described in more detail, by way of example, with reference to the accompanying drawings. It is to be noted that elements bearing the same reference numerals in different Figures are identical. In the drawings

Fig. 1a illustrates the recording method and Fig. 1b the read method for use in a type II video recorder,

Fig. 2a illustrates the recording method and Fig. 2b the read method for use in a type I video recorder,

Fig. 3 shows a first apparatus and

Fig. 4 shows a second apparatus for recording the video signal,

Fig. 5 shows a first apparatus and

Fig. 6 shows a second apparatus for reading the video signal,

Fig. 7a illustrates another recording method and Fig. 7b the corresponding read method for use in a type II video recorder,

Fig. 8a illustrates this other recording method and Fig. 8b the corresponding read method for use in a type I video recorder,

Fig. 9 shows a third apparatus and

Fig. 10 a fourth apparatus for recording the video signal, and

Fig. 11 shows a third apparatus and

Fig. 12 a fourth apparatus for reading the video signal.

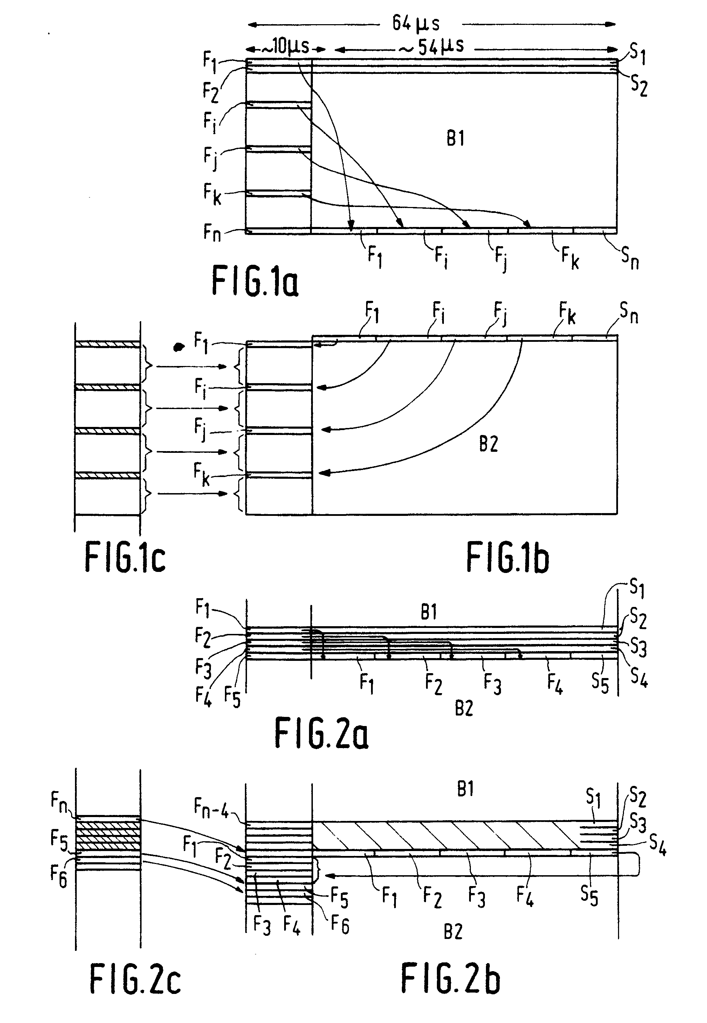

Fig. 1a schematically illustrates the method of recording the video signal on a magnetic record carrier, specifically the signal processing necessary before the information can be recorded on the record carrier by means of a type II video recorder. Fig. 1a shows schematically the MAC signal comprising n lines, each line containing a first signal block F and a second signal block S. The first signal block F of a line contains a line synchronizing signal (the horizontal synchronization) and an additional signal. This additional signal is, for example, a digital audio signal together with any further data. The second signal block S contains the chrominance and luminance information of the video signal.

Fig. 1a shows schematically the MAC signal of one field (half a picture B1). During one field the video recorder switches over m (= 4) times from recording by means of one write head to recording by means of another write head. These switching operations may be performed in the first signal blocks $F_1$, $F_i$, $F_j$ and $F_k$. In order to ensure that the information in these first signal blocks is not lost during recording these first signal blocks are accommodated in a second signal block S associated with a non-relevant line. In Fig. 1a this is the last second signal block $S_n$. The video information in this block $S_n$ is irrelevant because the line n falls outside the television picture. Instead of video information the information from blocks $F_1$, $F_i$, $F_j$ and $F_k$ is therefore accommodated in block $S_n$ and subsequently the signal thus obtained is recorded on the record carrier.

In principle, it is also possible to accommodate the above information from blocks $F_1$, $F_i$, $F_j$, $F_k$ in one or more second signal blocks of the first (approximately) twenty-three lines of a field, which lines appear in the vertical flyback interval and therefore do not contain any (relevant) video information.

Fig. 1b illustrates schematically the method of reading the video signal from the record carrier, specifically the signal processing necessary to reconvert the information read from the record carrier into an MAC signal. The information in field B1 shown in Fig. 1a is read from the record carrier. Since during reading switching over from one read head to another read head is effected in the first signal blocks $F_1$, $F_i$, $F_j$ and $F_k$ these signal blocks do not contain any relevant information (see hatched blocks in Fig. 1c, which represents the first signal blocks read from the record carrier). Now all the first signal blocks are delayed by a time interval T equal to the field period (which is n time 64 $\mu$s). The first signal blocks contained in the second signal block $S_n$ read are extracted therefrom and stored in a memory, after which they are re-inserted at their original locations (namely the first signal blocks $F_1$, $F_i$, $F_j$ and $F_k$) in the data stream of first signal blocks which has been delayed by the timeinterval T and reconstructed is then recombined with the data stream of the second signal blocks (which also may have been delayed by a specific time interval). Fig. 1b illustrates the situation in which the data stream of first signal blocks has been combined with the non-delayed data stream of second signal blocks (i.e. with the video information of the next field B2). Since a field comprises 312 lines the difference in time between the two data streams is approximately 20 ms. Such a difference in time between the two data streams is permissible.

The data stream of first signal blocks may have a delay larger than the field period (20 ms) provided that the resulting difference in time between the two data streams is permissible.

Fig. 2a illustrates schematically the method of recording the video signal on a magnetic record carrier and specifically the signal processing necessary before it is possible to record the information on the record carrier by means of a type I video recorder. Such a video recorder records exactly one field between two head switching operations. Head switching is performed during the vertical flyback. Fig. 2a represents the video information of the lower part of a field B1 and the upper part of a succeeding field B2. Head switching is effected during (x =) four lines containing the first and the second signal blocks $F_1$ and $S_1$, $F_2$ and $S_2$, $F_3$ and $S_3$, $F_4$ and $S_4$. The information of these four lines would be lost as a result of head switching. For the video information in the second signal blocks $S_1$ to $S_4$ this is not a problem. However, the information in the first signal blocks $F_1$ to $F_4$ should be preserved. The content of these first signal blocks is therefore accommodated in the second signal block ($S_5$) of a non-relevant video line (i.e. line 5). The video information in the second signal block $S_5$ is not relevant because this line 5 falls outside the television picture. Instead of this video information the information of blocks $F_1$ to $F_4$ is accommodated in block $S_5$. Subsequently, the signal thus obtained is recorded on the record carrier.

Fig. 2b illustrates schematically the signal processing necessary for reconverting the information read from a record carrier by means of a type I video recorder into a useful MAC signal. The data stream of first signal blocks read from the record carrier (see Fig. 2c, where the hatched blocks are the blocks which do not contain any (relevant) information as a result of head switching during reading) is now delayed by a time interval T equal to (x + 1 =) 5 times $t_1$, $t_1$ being the line period of 64 µs. The first signal blocks contained in the signal block $S_5$ being read are extracted therefrom, are stored in a memory and are subsequently reinserted into the data stream of first signal blocks (namely the first signal blocks $F_1$ to $F_4$) at the original locations, which data stream has been delayed by the time interval T. The data stream of first signal blocks which has been delayed by the time interval T and reconstructed is now recombined with the data stream of second signal blocks (which also may have been delayed by a specific time interval). Fig. 2b represents the situation in which the data stream of first signal blocks has beencombined with the non-delayed data stream of second signal blocks, so that there is a difference in time of 320 µs) between the two data streams, which is permissible.

The delay of the data stream of first signal blocks may also be larger than 320 µs provided that the resulting difference in time between the two data streams remains permissible. Further, it is evident from Fig. 2b that the second signal blocks $S_1$ to $S_4$ do not contain any information because at this instant head switching is effected during writing and reading. Moreover, the second signal block $S_5$ does not contain any chrominance and luminance information because the content of the first signal blocks $S_1$ to $S_4$ is accommodated in thic block.

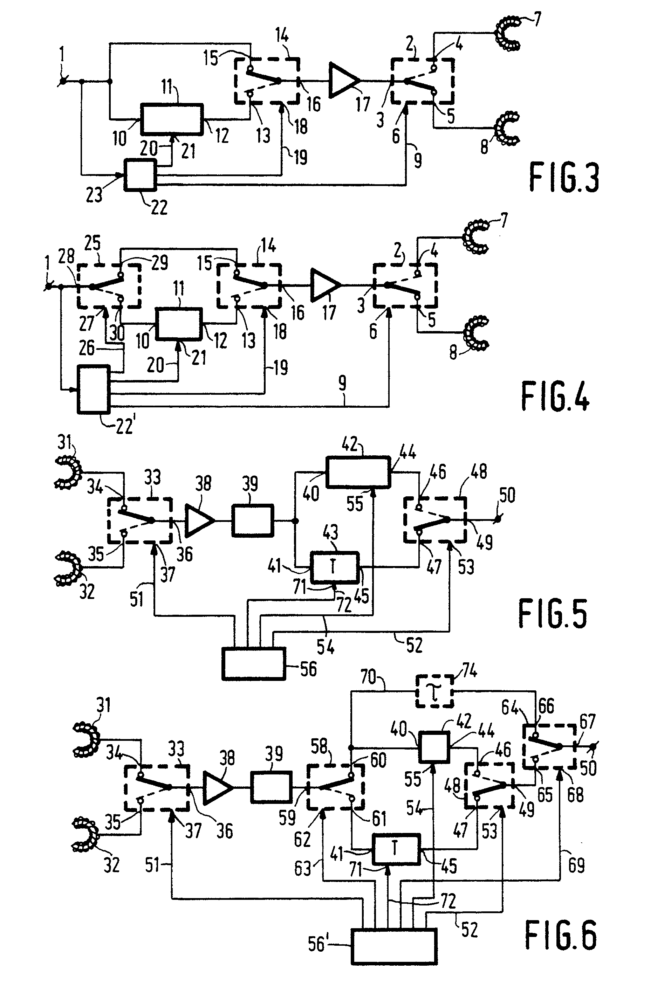

Fig. 3 shows an apparatus for recording a video signal on a magnetic record carrier. The apparatus comprises an input terminal 1 for receiving a video signal, for example a D2-MAC signal or a C-MAC signal, first switching means 2 having an input 3, two (or more) outputs 4 and 5 and a control input 6 , and two (or more) write heads 7 and 8. The outputs 4 and 5 are each coupled to a write head 7 and 9 respectively mounted on a rotatable head drum (not shown). The first switching means 2 are constructed to couple the input 3 to one of the outputs 4 or 5 under the influence of a control signal 9 applied to the control input 6. The input terminal 1 is coupled to an input 10 of a memory 11, which has an output 12 coupled to a first input 13 of second switching means 14. The input terminal 1 is also coupled to a second input 15 of the switching means, which have an output 16 coupled to the input 3 of the switching means 2 via a recording amplifier 17. The second switching means are constructed to couple one of the two inputs 13 and 15 to the output 16 under the influence of a control signal 19 applied to a control input 18. The memory 11 is constructed to store the additional signal in the first signal block which appears simultaneously with a head-switching operation. This storage in the memory is effected under the influence of a control signal 20 applied to a control input 21 of the memory 11. The control signals 9, 19 and 20 are supplied by a control unit 22 which derives these control signals from the video signal applied to an input 23.

The operation of the apparatus shown in Fig. 3 for carrying out the method as described with reference to Fig. 1a will now be described in more detail.

Since the video recorder is of the type II the times for switching from one write head to the other write head are short and fall within the first

signal blocks $F_1$, $F_i$, $F_j$, $F_k$. At the instant at which the first signal block $F_1$ is applied to the input terminal 1 the control unit 22 supplies a control signal 9 to the switching means 2, so that the switching means are set to the position indicated in uninterrupted lines, i.e. the input 3 and the output 5 are interconnected. In addition, the control unit 22 supplies a control signal 20 to the memory 11, so that the content of the first signal block $F_1$ is loaded into this memory. The memory 11 is, for example, a shift register into which the content of the signal block $F_1$ is shifted under the influence of the control signal 20. Subsequently, the second signal block $S_1$ is applied to the input terminal 1. Since the switching means 14 are in the position indicated in uninterrupted lines this signal block is applied to the write head 8 via the switching means 14, the recording amplifier 17 and the switching means 2 and is recorded in a track on the magnetic record carrier (not shown). Similarly, all the succeeding first and second signal blocks, namely $F_2$ and $S_2$ to $F_{i-1}$ and $S_{i-1}$ are recorded in the same track.

Subsequently the first signal block $F_i$ is applied to the input terminal 1. Again the control unit 22 supplies a control signal 9 to the switching means 2, causing these switching means to be set to the position indicated in broken lines, and said control unit also supplies a control signal 20 to the memory 11, so that the first signal block $F_i$ is stored in the memory 11. After this, the signal blocks $S_i$, $F_{i+1}$, $S_{i+1}$, ..., $F_{j-1}$, $S_{j-1}$ are successively applied to the input terminal 1 and to the write head 7 via the switching means 14, the recording amplifier 17 and the switching means 2. These blocks are then recorded on the record carrier in a second track which adjoins the first track.

This process is repeated for the first signal block $F_j$, which is again stored in the memory 11, and the signal blocks $S_j$, $F_{j+1}$, $S_{j+1}$, ..., $F_{k-1}$, $S_{k-1}$, which are recorded in a succeeding track on the record carrier by means of the write head 8.

Subsequently, the first signal block $F_k$ is applied to the input terminal 1. Again the control unit 22 supplies a control signal 9 and a control signal 20. As a result of this, the block $F_k$ is read into the memory 11. Subsequently, the blocks $S_k$, $F_{k+1}$, $S_{k+1}$, ..., $F_{n-1}$, $S_{n-1}$ and $F_n$ are recorded in the next track by means of the write head 7. After the first signal block $F_n$ has been applied the control unit 22 supplies a control signal 19 and a control signal 20. Under the influence of the control signal 19 the switching means 14 are set to the position shown in broken lines and the memory 11 is read out, so that instead of the second signal block $S_n$ the contents of the memory 11, i.e. the first signal blosk $F_1$, $F_i$, $F_j$ and $F_k$, are recorded in the track by means of the write head 7. It is obvious that the memory 11 should have a storage capacity which is large enough to store the signal blocks $F_1$, $F_i$, $F_j$, $F_k$.

Now one field is recorded on the record carrier in four adjacent tracks. This process is repeated for the following fields.

The operation of the apparatus shown in Fig. 3 for carrying out the method illustrated in Fig. 2a, will now be described. Since the video recorder is of the type I with only one head-switching operation per field, the times for switching from one write head to the other write head are long. Each switching time falls within the time interval occupied by the signal blocks $F_1$ and $S_1$ to $F_4$ and $S_4$. During recording of the field B1 the switching means 2 and 14 are in the positions indicated in uninterrupted lines. This means that the signal blocks $F_6$, $S_6$, $F_7$, $S_7$, ..., $F_n$, $S_n$ of the field B1 are recorded in a track on the record carrier by the write head 8. At the instant at which the first signal block $F_1$ of the field B2 is applied to the input terminal 1 the control unit 22 supplies a control signal 9 to the switching means 2, so that these switching means are set to the other position. The control unit now supplies a control signal 20 to the memory 11 four times in succession, namely at the instants at which the first signal blocks $F_1$, $F_2$, $F_3$ and $F_4$ are applied to the input terminal 1. Consequently, these four signal blocks are stored in the memory 11. At the instant at which the first signal block $F_5$ is applied to the input terminal 1 switching over is completed, so that the first signal block $F_5$ can be recorded on the record carrier by means of the write head 7. At this instant the control unit supplies a control signal 19 to the switching means 14, so that the switching means are set to the position indicated in broken lines, and the control unit supplies a control signal 20 to the memory 11, causing this memory to be read out, the content of the first signal blocks $F_1$ to $F_4$ to be inserted into said second signal block $S_5$ and, instead of the original information in this second signal block, the content of the first signal blocks $F_1$ to $F_4$ to be recorded in the track by the write head 7. After this, the switching means 14 are reset to the original position and the signal blocks $F_6$, $S_6$, ..., $F_n$, $S_n$ of the field B2 can be recorded in the relevant track on the record carrier. This process is repeated for succeeding fields.

Fig. 4 shows another apparatus for recording a video signal, which apparatus bears much resemblance to the apparatus shown in Fig. 3. The difference is that third switching means 25 are coupled between the input terminal 1 and the inputs 10 and 15 of the memory 10 and the switching means 14 respectively, and the control unit 22' is adapted to supply a control signal 26 to a control input 27 of the switching means 25. The input terminal 1 is coupled to an input 28 of the switching means 25.

The outputs 29 and 30 are coupled to the input 15 of the switching means 14 and the input 10 of the memory 11 respectively.

The apparatus shown in Fig. 4 operates in the same way as the apparatus shown in Fig. 3. However, in addition the control unit 22' supplies a control signal 26 to the switching means 25 at the instant of switching over from one write head to the other, so that the switching means 25 are then set to the position indicated in broken lines. This means that the blocks $F_1$, $F_i$, $F_j$, $F_k$ (see Fig. 1a) or the blocks $F_1$ to $F_4$ (see Fig. 2a) can then be loaded into the memory 11.

Fig. 5 shows an apparatus for reproducing a video signal from a magnetic record carrier. The apparatus comprises two (or more) readheads 31 and 32, first switching means 33 having two (or more) inputs 34 and 35, an output 36 and a control input 37. By means of a playback amplifier 38 and a time-base correction circuit 39 the output 38 is coupled to inputs 40 and 41 of a memory 42 and a delay means 43 respectively. The outputs 44 and 45 of the memory 42 and the delay means 43 respectively are coupled to respectively a first input 46 and a second input 47 of second switching means 48, which have an output 49 coupled to an output terminal 50 on which the video signal appears. The delay means 43 is controlled by a control signal 72 applied to a control input 71.

The first switching means are constructed to couple one of the inputs 34, 35 to the output 36 under the influence of a control signal 51 applied to the control input 37. The second switching means 48 are constructed to couple one of the inputs 46, 47 to the output 49 under the influence of a control signal 52 applied to a control input 53 of the switching means 48. The memory 42 is constructed to store under the influence of a control signal 54 applied to a control input 55 of the memory 42 the additional signal contained in the relevant signal block read from the track. The control signals 51, 52, 54 and 72 are supplied by a control unit 56 which is capable of deriving these control signals from an internal clock in the control unit 56, which clock can be synchronized in a suitable manner with the signal read from the tape.

The operation of the apparatus shown in Fig. 5, for carrying out the method of reading the video signal from the magnetic record carrier, will be described in more detail hereinafter.

Fig. 6 shows another apparatus for reading a video signal from a magnetic record carrier. The apparatus of Fig. 6 has much in common with the apparatus shown in Fig. 5. In addition the apparatus shown in Fig. 6 comprises third switching means 58, having an input 59 coupled to the output of the time-base correction circuit 39, a first output 60 and a second output 61 coupled to the input 40 of the memory 42 and the input 41 of the delay means 43 respectively, and a control input 62 for receiving a control signal 63. Further, the apparatus comprises fourth switching means 64 having a first input 65 coupled to the output 49 of the switching means 48, a second input 66 coupled to the output 60 of the switching means 58, an output 67 coupled to the output terminal 50, and a control input 68 for receiving a control signal 69. The control signals 51, 52, 54, 63, 69 and 72 are supplied by control unit 56', which is capable of deriving these control signals from an internal clock in the control unit 56, which clock can be synchronised in a suitable manner with the signal read from the tape.

The operation of the apparatus of Fig. 6, for carrying out the method as described with reference to Fig. 1b, will now be explained. For the time being the circuit 74 is to be regarded as an electrical interconnection. It is assumed that the read head 31 reads the first signal block $F_2$ of the field $B_1$ (see Fig. 1a) from a track. The control signal 63 is then such that the switching means 58 are set to the (lower) position indicated in broken lines. The signal block $F_2$ is then applied to the input 41 of the delay means 43, for example a (digital) shift register, via the switching means 33 and 58 and read into said delay means under the influence of the control signal 72. After the signal block $F_2$ the switching means 58 are changed over and the second signal block $S_2$ is applied to the output terminal via the switching means 33 and 58, the circuit 70 and the switching means 64. Subsequently, the switching means 58 change over and the signal block $F_3$ is shifted into the delay means 43. The switching means then change over again and the signal block $S_3$ is supplied to the output terminal 50 via the circuit70. This continues until the signal blocks $F_{i-1}$ and $S_{i-1}$ have been read. The switching means 33 are then changed over under the influence of the control signal 51. The switching means 58 are now again in the (lower) position indicated in broken lines. At this instant and subsequent switching instants no information, i.e. no useful information, is read into the memory 42, see the hatched blocks in Fig. 1c. Subsequently, the switching means 58 are set to the upper position and the second signal block $S_i$ read from the next track by the read head 32 is applied to the output terminal 50 via the circuit 70. This proceeds until after two further switching operations of the switching means 33 the signal blocks $F_{n-1}$ and $S_{n-1}$ have been read. Subsequently, the switching means 58 are set to the lower position and the block $F_n$ is read into the delay means 43 under the influence of the control signal 72. After this, the switching means 58 change over to the upper position. The block $S_n$, containing the (additional information from)blocks $F_1$, $F_i$, $F_j$ and $F_k$, is read and is loaded into the memory 42 under the influence of the control signal 54. At this instant the memory 42 contains the signal blocks $F_1$, $F_i$, $F_j$ and $F_k$ and the delay means 43 contains the blocks $F_2$ to $F_{i-1}$, $F_{i+1}$ to $F_{j-1}$, $F_{j+1}$ to $F_{k-1}$, $F_{k+1}$ to $F_n$ (see Fig. 1c).

While the first and second signal blocks associated with the next field B2 are being read from the record carrier, the first signal blocks $F_1$ to $F_n$ stored in the memory 42 in the delay means 43 are inserted into the second signal blocks of the field B2. This proceeds as follows.

After the block $S_n$ of the field B1 has been read a change-over to the other read head (the read head 31) is effected. Moreover, the switching means 48 are set to the upper position and the switching means 64 to the lower position and the first signal block F of the field B1 is read out to the memory 42 under the influence of the control signal 54 and applied to the output terminal 50. After this, the switching means 64 are set to the upper position, so that subsequently the second signal block $S_1$ of the field B2 read by the read head 31 is applied to the output terminal 50. Next the switching means 48 and 64 are both set to their lower positions and under the influence of the control signal 72 the signal block $F_2$ of the field B1 is read out of the delay means and applied to the output terminal 50. Simultaneously the signal block $F_2$ of the field B2 is shifted into the delay means 43, as already explained hereinbefore for the field B1 read from the record carrier. Subsequently, the switching means 64 are set to the upper position and the second signal block $S_2$ of the field B2 is applied to the output terminal. This change-over of the switching means 64 continues until the signal blocks $F_2$ to $F_{i-1}$ of the field B1 are shifted out of the delay means and combined with the signal blocks $S_2$ to $S_{i-1}$ of the field B2. Subsequently, the switching means 48 are set to the upper position and the switching means 64 to the lower position and, under the influence of the control signal 54, the block $F_i$ of the field B1 is read out of the memory 42 and applied to the output terminal 50. The switching means 64 again switch to the upper position, so that the block $S_i$ of the field B2 is supplied to the output terminal 50. After this, with the switching means 48 in the lower position and the switching means 64 alternately in the lower and the upper position, the blocks $F_{i+1}$ to $F_{j-1}$ of the field B1 are combined with the blocks $S_{i+1}$ to $S_{j-1}$ of the field B2.

This process continues until all first signal blocks of the field B1 have been combined with the second signal blocks of the field B2. In the meantime the first signal blocks of the field B2 have been loaded into the memory 42 and the delay means 43 and are subsequently combined with the second signal blocks of the next field (B3, not shown).

The delay means 43 provide a delay T equal to one field period. The circuit 70 may include a delay means 74. This delay means 74 may provide a delay $\tau$ of, for example, one field period. In this case the first and the second signal blocks of the same field are always combined with one another. However, other delay times $\tau$ are also possible, provided that the data stream to be combined do not coincide in time. The apparatus shown in Fig. 6 is very suitable for reading MAC signals in which the first signal blocks contain digital information which can easily be delayed in a (digital) delay means 43, and in which the second signal blocks contain analog information which is applied directly (i.e. not via the delay means 74) to the output terminal 50 via the circuit 70.

The operation of the apparatus shown in Fig. 6 will now be described for a read method as described with reference to Figs. 2b and 2c.

The field B1 is read by means of a read head 31, the switching means 58 being in the lower position when of the first signal block F is being read and the relevant first signal block being read into the delay means 43 under the influence of the control signal 72, the switching means 58 being in the upper position when the second signal block S is being read and the relevant second signal block being applied to the output terminal 50 (because the switching means 64 are in the upper position). During switching from the read head 31 to the read head 32 no reading is effected for four line periods. After this, the first signal block $F_5$ of the field B2 is read and stored in the delay means 43. Subsequently, the switching means 58 are reset to the upper position and the content of the second signal block $S_5$ of the field B2 is loaded into the memory 42 under the influence of the control signal 54. Simultaneously, the block $F_n$ of the field B1 is supplied from the delay means 43 to the output terminal 50. The second signal block $S_5$ contains the information from the first signal blocks $F_1$ to $F_4$ of the field B2. Consequently, this information is now present in the memory 42.

At the instant at which the signal block $F_6$ of the field B2 is read into the memory 43 (switching means 58 in the lower position) the signal block Fis read out of the memory 42 under the influence of the control signal 54 and applied to the output terminal 50 via the switching means 48 (the upper position) and the switching means 64 in the lower position). Subsequently, the block $S_6$ is read and applied to the output terminal 50 via the switching means 58 and 64 (both in the upper position). After this, at the instant at which the signal block $F_7$ is loaded into the delay means 43 (switching means 58 in the lower position) the signal block $F_2$ is read out of the memory 42 under the influence of the control signal 54 and applied to the output terminal 50 via the switching means 48(in the upper position) and the switching means 64 (in the lower position). Similarly, $S_7$, $F_3$, $S_8$, $F_4$ and $S_9$ are successively applied to the output terminal.

Subsequently, at the instant at which the block $F_{10}$ is loaded into the delay means 43(the switching means 58 in the lower position) the block $F_5$ is read out of the delay means and applied to the output terminal 50 via the switching means 48 and 64 (both in the lower position), after which $S_{10}$ appears on the output terminal 50 (the switching means 64 being in the upper position).

Subsequently, the first signal blocks $F_6$, $F_7$, ... etc., delayed by five line periods in the delay means 43, are inserted between the second signal blocks $S_{11}$, $S_{12}$, ... etc. by the repeated changeover of the switching means 64, the switching means 48 being in the lower position, see also Figs. 2b and 2c.

In the present case the circuit 70 may again include a delay means 74, which provides a delay of, for example, five line periods. The first and the second signal blocks associated with the same line are then combined with each other but other delay times $\tau$ are also possible, provided that the data streams to be combined do not coincide in time.

As already stated in the foregoing, the apparatus shown in Fig. 6 is very suitable for reading MAC signals in which the first signal blocks contain a digital signal and the second signal blocks an analog signal (or vice versa )

If the first and the second signal blocks both containdigital (or analog) signals the apparatus shown in Fig. 5 is very suitable.

The apparatus shown in Fig. 5 operates as follows. The field B1 of Fig. 1a is read. This means the blocks $F_1$, $S_1$, $F_2$, $S_2$,...., $F_{n-1}$, $S_{n-1}$ are read and are successively loaded into the delay means 43 under the influence of the control signal 72. The blocks $F_1$, $F_i$, $F_j$ and $F_k$ do not contain any (useful) information because head switching is effected at the instants at which these blocks are read. After this, the second signal block $S_n$ is read and under the influence of the control signal 54 it is stored in the memory 42. Since the delay means 43 provides a delay T equal to the field period, the field B1 is read out of the delay means 43 and the memory 42 under the influence of control signals 72 and 54 at the same time that the field B2 is read from the record carrier and loaded into the delay means 43 and the memory 47. The switching means 48 are in theupper position andunder theinfluence of the control signal 54 the first signal block $F_1$ of the field B1 is read out of the memory 42 and applied to the output terminal 50. Subsequently, the switching means 48 are set to the lower position. Under the influence of the control signal 72

the signal blocks $S_1$, $F_2$, $S_2$, ... $F_{i-1}$, $F_{j-1}$ are shifted out of the delay means 43 and applied to the terminal 50. The switching means 48 are reset to the upper position, causing the first signal block $F_i$ to be read out of the memory 42, after which the switching means 48 again switch over and the signal blocks $S_i$, $F_{i+1}$, $S_{i+1}$, ..., $F_{j-1}$, $S_{j-1}$ are shifted out of the delay means 43. This is repeated twice, after which the entire field B1 has been reproduced.

In this method is similar to that of Figs. 1b and 1c, with the difference that in addition the data stream of second signal blocks is delayed by one field period.

Alternatively, the apparatus shown in Fig. 5 can function as follows. The field B2 of Fig. 2a is read. This means that at a given instant the first block of useful information(which is the block $F_5$) is shifted into the delay means 43 under the influence of the control signal 72. Subsequently, the signal block $F_5$ containing the information of the first signal blocks $F_1$ to $F_4$ is loaded into the memory 42 under the influence of the control signal 54. At the instant at which the block $F_6$ is shifted into the delay means 43 the switching means 48 are in the upper position and under the influence of the control signal 54 the signal block $F_1$ is read out of the memory 42 and applied to the terminal 50. Subsequently, the switching means 48 are changed over and the block $S_1$ (which does not contain any useful information) is shifted out of the delay means 43 and applied to the terminal 50. At the same time the block $S_6$ is read from the track and shifted into the delay means 43. Subsequently, the switching means are set to the upper position and the signalblock $F_2$ is read out of the memory 42. With the aid of the switching means 48, which are continually changed over in this way, the block $S_2$ is read out of 43, $F_3$ is read out of 42, $S_3$ is read out of 43, and $F_4$ is read out of 42 after which they are applied to the terminal 50. After this, the switching means 48 are set to the lower position and the blocks $S_4$, $F_5$, $S_5$, ... $F_n$ and $S_n$ are read out of the delay means 43 and applied to the terminal 50.

In fact, this is a description of the method of Figs. 2b and 2c, with the difference that in addition the data stream of second signal blocks is delayed by five line periods.

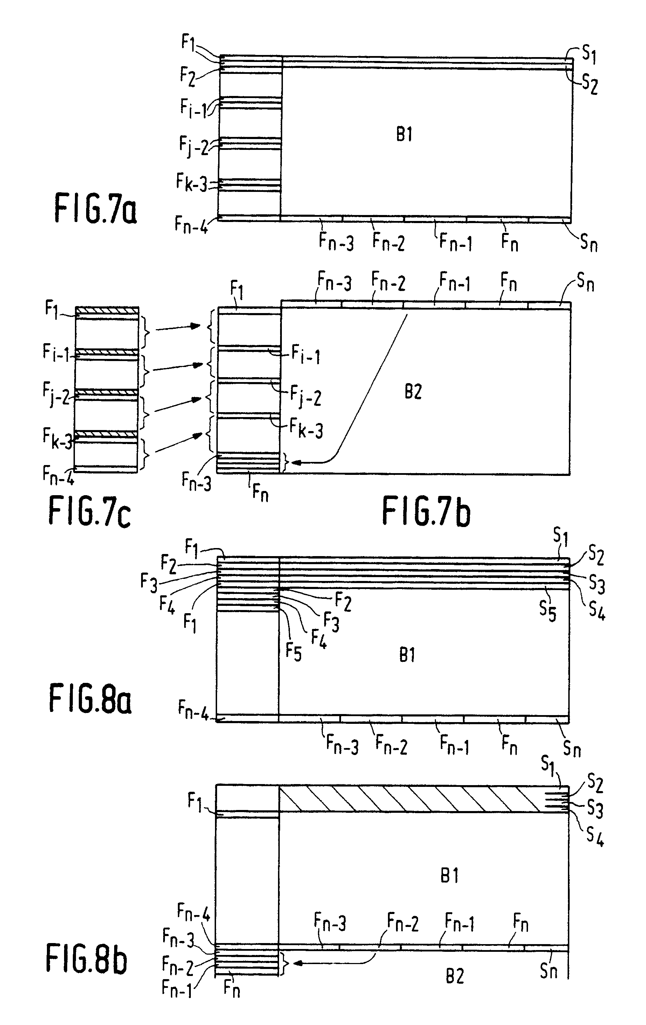

Fig. 7a shows schematically another method of recording a video signal, for example an MAC signal, on a magnetic record carrier. specifically the signal processing necessary before the information can be recorded on the record carrier by means of a type II video recorder. Prior to recording on the record carrier the first signal blocks during which head switching is effected are repeated. The first head switching operation is effected in the field B1 during the first signal block $F_1$.

Therefore, the signal block $F_1$ is repeated. This means that the first signal block $F_1$ is now situated at the location where in Fig. 1a the first signal block $F_2$ is situated. This second first signal block now precedes the second signal block $S_2$. The first signal blocks $F_2$ to $F_{i-1}$ now appear in the video signal with a delay of one line period, which means that the next head-switching operation is effected during the first signal block $F_{i-1}$. This first signal block is also repeated. Consequently, the first signal blocks $F_i$ to $F_{j-2}$ appear in the video signal with a delay of two line periods which again means that the following head switching operation is effected during the first signal block $F_{j-2}$. This first signal block is also repeated. Consequently, the first signal blocks $F_{j-1}$ to $F_{k-3}$ appear in the video signal with a delay of three line periods, which means that the last head switching operation is effected during the field B1 in the first signal block $F_{k-3}$. This first signal block is repeated, so that subsequently the first signal blocks $F_{k-2}$ to $F_{n-4}$ appear in the video signal with a delay of four line periods. The first signal block $F_{n-4}$ then precedes the second signal block $S_n$, so that in the data stream of first signal blocks there is no more room for the last four first signal blocks $F_{n-3}$ to $F_n$. These first four signal blocks are therefore accommodated in the second signal block $S_n$ of the (non relevant) video line n instead of the video information of the second signal block $S_n$ and subsequently recorded on the record carrier.

Fig. 7b illustrates the method of reading the video signal and in particular the signal process necessary for reconverting the information read from the record carrier into an MAC signal. The information covering the field B1 and shown in Fig. 7a is read from the record carrier. The data stream of first signal blocks being read is shown separately in Fig. 7c. The hatched areas indicate the positions where no (relevant) information is situated as a result of head switching during recording and reproduction. The data stream of first signal blocks $F_1$ to $F_{i-2}$ is delayed by one field period minus one line period (the duration of a half picture minus one line period) and the content of the second signal block $S_n$ being read is extracted from the second signal block and stored in the memory. The first signal blocks $F_1$ to $F_{i-2}$ of the field B1 are subsequently combined with the second signal blocks $S_1$ to $S_{i-2}$ of the field B2. The data stream of first signal blocks $F_{i-1}$ to $F_{j-3}$ of the field B1 read from the track is delayed by one field period minus two line periods and is subsequently combined with the second signal blocks $S_{i-1}$ to $S_{j-3}$ of the field B2 being read from the record carrier at this instant.

The data stream of first signal blocks $F_{j-2}$ to $F_{k-4}$ of the field B1 is delayed by one field period minus three line periods and subsequently combined with the second signal blocks $S_{j-2}$ to $S_{k-4}$ of the field B2 being read at this instant. Similarly, the first signal blocks $F_{k-3}$ to $F_{n-4}$ of the field B1 are delayed by one field period minus four line periods and subsequently combined with the second signal blocks $S_{k-3}$ to $S_{n-4}$ of the field B2. Subsequently, the first signal blocks $F_{n-3}$ to $F_n$ of the field B1 are read out of the memory and combined with the second signal blocks $S_{n-3}$ to $S_n$ of the field B2.

All the remarks made with reference to Fig. 1b as regards the difference in time between the two data streams and the delay (if any) of the daa stream of the second signal blocks now also apply.

Fig. 8a illustrates schematically the method of recording an MAC signal on a magnetic record carrier and, in particular, the signal processing necessary for recording information on the record carrier by means of a type I video recorder. As will be apparent from Fig. 8a, the data stream of first signal blocks $F_1$ to $F_{n-4}$ of the field B1 is delayed by four line periods and, combined with the second signal blocks $S_5$ to $S_n$, recorded in a track on the record carrier. It willalso be appreciated that in the data stream of first signal blocks there is no more room for accommodating the first signal blocks $F_{n-3}$ to $F_n$. These four first signal blocks are therefore accommodated in the second signal block $S_n$ and subsequently recorded in the track on the record carrier.

Fig. 8b schematically illustrates the signal processing necessary for re-converting information read from a record carrier by means ofa type I video recorder into a useful MAC signal. The blocks $F_1$, $S_5$, $F_2$, $S_6$, ..., $F_{n-5}$ $F_{n-1}$, $F_{n-4}$ and $S_n$ are successively read from the track. The first signal blocks $F_{n-3}$ to $F_n$ in the second signal block $S_n$ are extracted therefrom, stored in the memory and subsequently re-inserted into the data stream of first signal blocks.

Again all the remarks made with reference to Fig. 2b as regards the difference in time between the two data streams and the delay (if any) of the data stream of second signal blocks also apply to this case.

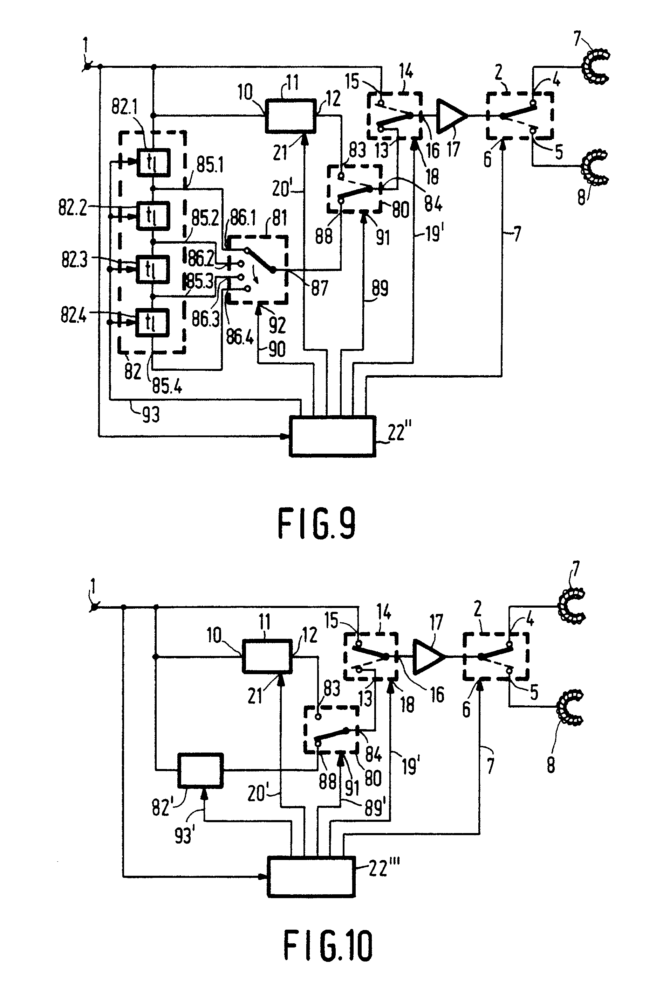

Fig. 9 shows an apparatus for recording a video signal, for example, a D2-MAC or a C-MAC signal, on a magnetic record carrier. The apparatus is intended for carrying out the method as described with reference to Fig. 7a. The apparatus bears much resemblance to the apparatus shown in Fig. 3. The differences are as follows. The apparatus comprises third and fourth switching means 80 and 81 and a delay means 82. The output 12 of the memory 11 is coupled to a first input 83 of the third switching means 80, having anoutput 84 coupled to the first input 13 of the second switching means 14. The delay means 83, which comprises four delay means sections, each of which provides a delay by one line period $t_1$, has four tappings 85.1 to 85.4. Each tapping is coupled to an associated input 86.1 to 86.4 of the fourth switching means 86. The output 87 of the switching means is coupled to the second input 88 of the switching means 80. The switching means 80 and 81 are constructed to couple one of the inputs to the output under the influence of control signals 89 and 90 respectively applied to the control input 91 and 92 respectively of these switching means. The control unit 22' further supplies a control signal 93 to the delay means 82.

The apparatus operates as follows. The switching means 14 are in the upper position. In accordance with Fig. 7a the signal block $F_1$ is first supplied to the input terminal. At this instant switching over is effected from recording by means of one write head 8 to recording by means of the other write head 7, i.e. the switching means 2 are set to the upper position. This means that the signal block $F_1$ cannot be recorded on the record carrier. Moreover, a control signal appears via the line 93, so that the signal block $F_1$ is shifted into the first delay means sections. Subsequently, the signal block $S_1$ is applied to the input terminal 1 and is applied to the write head 7 via the switching means 2 so as to be recorded. Subsequently, the signal block $F_2$ is applied to the input terminal 1. The switching means 14 are set to thelower position. Under the influence of the control signal 93 the signal block $F_1$ is read out of the first delay-means section and applied to the write head 7 via the tapping 85.1, the switching means 81 (in the upper position) and the switching means 14 and 2 and is recorded on the record carrier. Moreover, under the influence of the control signal 93 the signal block $F_1$ is shifted into the second delay-means section 82.2 and the signal block $F_2$ is shifted into the first delay-means section 82.1. Subsequently, the signal block $S_2$ appears on the input terminal 1, the switching means 14 are set to the upper position and the signal block $S_2$ is recorded on the tape. Now the signal block $F_3$ is applied to the input terminal 1. The switching means 14 are again set to the lower position and under the influence of the control signal 93: (a) the signal block $F_1$ is read out of the delay-means section 82.2 and shifted into the delay-means section 82.3, (b) the signal block $F_2$ is read out of the delay-means section 82.1 and recorded on the record carrier and the signal block $F_3$ shifted into the delay means section 82.2, and (c) the signal block $F_3$ is shifted into the delay-means section 82.1. Subsequently, the signal $S_3$ is read in (switching means 14 in theupper position). By setting the switching means 14, 20 alternately to the upper and the lower position $F_3$, $S_4$, $F_4$, $S_5$, ..., $F_{i-2}$, $S_{i-1}$ are subsequently recorded. Now $F_i$ is applied to the input terminal 1. Under the influence of the control signal 93, the information is shifted in the delay-means sections and the signal block $F_i$ is read into the first delay-means sectinon 82.1. Since at this instant the switching means 2 are set to the lower position, the signal block $F_{i-1}$ appearing on the tapping 85.1 is not read in. After this the signal block $S_i$ is applied to the input terminal 1 and, via the switching means 14 and 2, applied to the write head 8 so as to be recorded. Now the signal block $F_{i+1}$ is applied to the terminal 1. Under the influence of the control signal 93 the information is advanced one position in the delay means 82. This means inter alia that the block $F_{i-1}$ is shifted out of the delay-means section 82.2, appears on the tapping 85.2 and is also shifted into the delay-means section 82.3. Moreover, under the influence of the control signal 90, the switching means 81 are set one position further. This means that the input 86.2 is now connected to the output 87. Consequently, the block $F_{i-1}$ is recorded by means of the write head 8 via the switching means 81, 80, 14 and 2. Subsequently, the signal block $S_{i+1}$ is applied to the terminal 1 and recorded via the switching means 14 and 2. After this the signal blocks $F_i$, $S_{i+2}$, $F_{i+1}$, $S_{i+3}$, ..., $F_{j-3}$, $S_{j-1}$ are recorded with the switching means 14 alternately in the upper and lower position.

After this the block $F_j$ is applied to the input terminal 1. Under the influence of the control signal 7 the switching means 2 are reset to the upper position. Moreover, under the influence of the control signal 93 the information is shifted in the delay means 82 (i.e. block $F_{-j-1}$ is shifted to the delay-means section 82.2, the block $F_{j-2}$ to the delay-means section 82.3 and the block $F_{j-3}$ to the delay means section 82.4) and the block $F_j$ is shifted into the delay-means section 82.1. After this, the signal block $S_j$ is applied to the terminal 1 and recorded by the write head 7. Subsequently, the block $F_{j+1}$ is applied. The switching means 14 are set to the lower position and the switching means 81 are set to the position in which the input 86.3 is coupled to the output 87. Under the influence of the control signal 93 the informationis advanced one position in the delay means 82, i.e. the block $F_{j-1}$ is shifted into the delay-means section 82.4 and is applied to the write head 7 via the switching means 81, 14 and 2 so as to be recorded on the record carrier.

Subsequently, the signal blocks $S_{j+1}$, $F_{j-1}$, $S_{j+2}$, $F_j$, ..., $F_{k-4}$, $S_{k-1}$ are recorded. At the instant at which $F_k$ is applied to the terminal 1 the switching means 2 are set to the lower position, the information is advanced in the delay means 82 and the block $F_k$ is read into the delay-means section 82.1. This means that the blocks $F_{k-3}$ is shifted to the delay-means section 82.4 and is not recorded at this instant as a result of the change-over to the write

head 8. Subsequently, $S_k$ is applied to the terminal 1 and recorded on the record carrier. After this the block $F_{k+1}$ is applied to the terminal 1 andunder the influence of the control signals 93 the information is advanced in the delay means 82, so that the block $F_{k-3}$ appears on the tapping 85.4. Since the switching means 81 are set to the lower position under the influence of the control signal 9 this block $F_{k-3}$ is recorded on the record carrier. Subsequently, the blocks $S_{k+1}$, $F_{k-2}$, $S_{k+2}$, $F_{k-1}$, $S_{k+3}$, ..., $F_{n-9}$, $S_{n-5}$ are recorded.

Subsequently, the signal block $F_{n-4}$ is applied to the terminal 1. Under the influence of the control signal 93 the information is advanced one position in the delay means 93. This means that $F_{n-8}$ is shifted out of the delay-means section 82.4 and is recorded on the record carrier. After this $S_{n-4}$ is applied to the terminal 1 and recorded. Subsequently, $F_{n-3}$ appears on the terminal 1. Under the influence of the control signal $20'$ $F_{n-3}$ is loaded into the memory 11. Under the influence of the control signal 93 the information is advanced in the delay means 82, so that the block $F_{n-7}$ is recorded by the write head 8 via the switching means 81, 80, 14 and 2. Subsequently $S_{n-3}$ is recorded. After this, $F_{n-2}$ appears on the terminal 1 and is loaded into the memory 11 under the influence of the control signal $20'$. Moreover, the block $F_{n-6}$ and then the block $S_{n-2}$ are recorded on the record carrier. Subsequently, $F_{n-1}$ appears on the terminal 1 and is stored in the memory 11. Moreover, the block $F_{n-5}$ and then the block $S_{n-1}$ are recorded on the record carrier. Now the block $F_n$ appears on the terminal 1 and is also recorded on the record carrier. In addition, the block $F_{n-4}$ is recorded on the record carrier.

Subsequently, the switching means 80 are set to the upper position and at the instant at which the block $S_n$ is applied to the terminal 1 the switching means 14 remain in the lower position and under the influence of the control signal $20'$ the blocks $F_{n-3}$ to $F_n$ are read out of the memory 11 and recorded on the record carrier instead of the signal block $S_n$. The process described above is repeated for successive fields.

Fig. 10 shows an apparatus for recording a video signal, by means of which the method described with reference to Fig. 8a can be carried out. At theinstant at which the blocks $F_1$, $S_1$, $F_2$, $S_2$, $F_3$, $S_3$, $F_4$ and $S_4$ are applied a change-over to the write head 7 occurs, so that these blocks cannot be recorded on the record carrier. However, under the influence of the control signal $93'$, the blocks $F_1$, $F_2$, $F_3$ and $F_4$ are shifted into the delay means $82'$, which provides a delay by four line periods. This means that if subsequently the block $F_5$ is applied to the terminal 1 and is shifted into the delay means $82'$ under the influence of the control signal $93'$, the block $F_1$ appears on the output under the influence of the same control signal $93'$ and is applied to the write head 7 via the switching means 80 and 14 (both in the lower position) and the switching means 2 (in the upper position) so as to be recorded. Subsequently, with the switching means 14 alternately in the upper position and the lower position the blocks $S_5$, $F_2$, $S_6$, $F_3$, ..., $F_{n-8}$, $S_{n-4}$ are recorded. After this the block $F_{n-3}$ is applied to the terminal 1. Under the influence of the control signal $20'$ this block is loaded into a memory 11. At the same time $F_{n-7}$ is recorded on the record carrier, followed by $S_{n-3}$. Subsequently, the block $F_{n-2}$ appears on the terminal 1. This block is also loaded into the memory 11, whilst $F_{n-6}$ and subsequently $S_{n-2}$ are recorded on the record carrier. After this, the block $F_{n-1}$ appears on the terminal 1. This block is loaded into the memory 11, whilst $F_{n-5}$ and subsequently $S_{n-1}$ are recorded on the record carrier. Then $F_n$ is applied to the terminal 1 and is stored in the memory 11, whilst at the same time $F_{n-4}$ is shifted out of the delay means $82'$ and recorded on the record carrier. Finally, $S_n$ is applied to the terminal 1. At this instant the switching means 80 change over to the upper position and the switching means 14 remain in the lower position. Under the influence of the control signal $20'$ the blocks $F_{n-3}$ to $F_n$ are shifted out of the delay means 11 and recorded on the record carrier,instead of the block $S_n$. This process is repeated for successive fields.

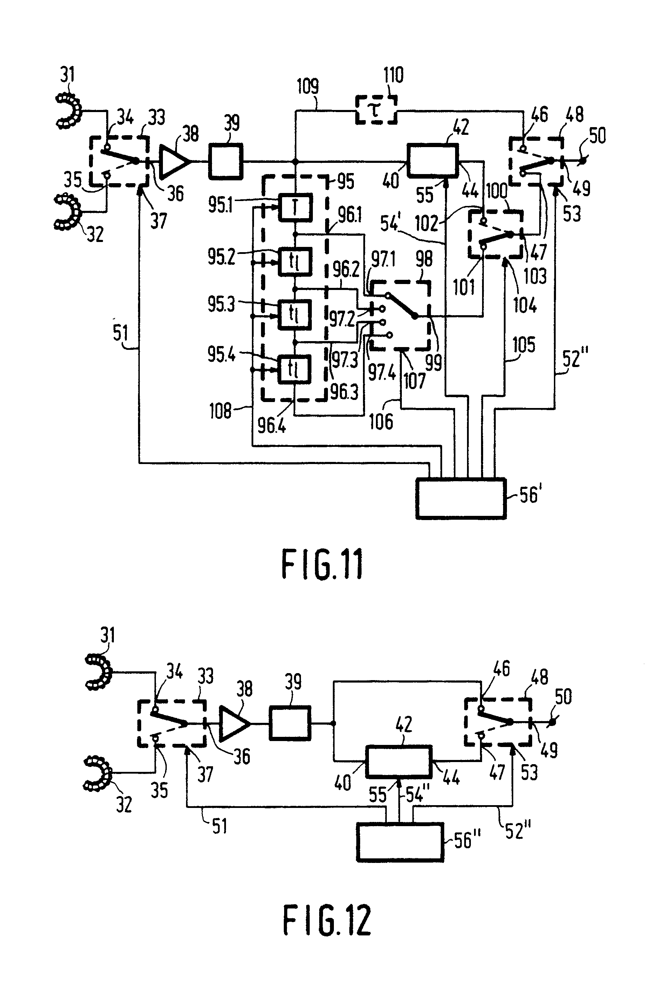

Fig. 11 shows an apparatus for reading a video signal from the record carrier in accordance with the method as described with reference to Figs.7b and 7c. The apparatus bears some resemblance to the apparatus shown in Fig. 5 or Fig. 6. The output of the time-base correction circuit 39 is coupled to a delay means 95 comprising four delay-means sections 95.1 to 95.4 and four tappings 96.1 to 96.4. The output of the memory 42 is coupled to a first input 102 of third switching means 100, having an output 103 coupled to the first input 47 and the second switching means 48. The tappings 96.1 to 96.4 of the delay means 95 are coupled to associated inputs 97.1 to 97.4 of fourth switching means 98, which have an output 99 coupled to a second input 101 of the switching means 100. The switching means 100 and 98 are constructed to couple one of the inputs to the output under the influence of a control signal 105 and 106 respectively applied to a respective control input 104 and 107 of the switching means. The delay means 95 receive a control signal 108 from the control unit $56'$. The apparatus operates as follows.

The last part of the field B1 is read with the switching means 33 in the lower position. At the instant at which the second signal block $S_n$ of the field B1 appears on the output 36 the content of this block, specifically the first signal blocks $F_{n-1}$ to $F_n$, is laoded into the memory 42 under the influence of the control signal 54'. At this instant all the first signal blocks $F_1$ to $F_{n-4}$ are stored in the delay means 95. This means that the block $F_1$ is situated in the delay-means section 95.4 ,the block $F_2$ in the delay-means section 95.3, the block $F_3$ in the delay-means section 95.2 and the blocks $F_4$ to $F_{n-4}$ in the delay-means section 95.1. This means that the delay means 95 provide an overall delay time $T + 3t_1$ equal to one field period minus one line period, in other words T is equal to one field period minus four line periods. This means that the delay-means section 95.1 contains the data stream of first signal blocks as shown in Fig. 7c, except for the first (upper) hatched data block in Fig. 7c.

Hereinafter, it will be described how the first signal blocks of the field B1 are inserted between the second signal blocks of the field B2. At the instant at which the switching means 33 are set to the upper position the information is advanced one position in the delay means 95 under the influence of the control signal 108. This means that (a) block $F_1$ is read out of the delay-means section 95.4 and applied to the output terminal 50 via the switching means 98 (in the lower position) and the switching means 100 and 48 (both in the lower position), (b) blocks $F_2$, $F_3$ and $F_4$ are now shifted into the delay-means sections 95.4, 95.3 and 95.2 and the delay means 95.1 now contains blocks $F_5$ to $F_{n-4}$ of the field B1 and one block of the field B2 which does not contain any information as a result of the change-over to the (other) read head 21. The block $S_1$ of the field B2 is now applied to the terminal 50 via the circuit 109 and the switching means 48 (in the upper position). Subsequently, the blocks $F_1$, $S_2$, $F_2$, $S_3$, ..., $F_{i-3}$, $S_{i-2}$, of the field B2 are read out in this order. The blocks $F_1$ to $F_{i-3}$ of the field B2 are shifted into the delay means section 95.1, whilst at the same time the blocks $F_2$ to $F_{i-2}$ of the field B1 are shifted out of the delay-means section 95.4 and these signal blocks are combined with (inserted between) the blocks $S_2$ to $S_{i-2}$ of the field B2 via the switching means 48 which are alternately set to the lower and the upper position.

Subsequently, $F_{i-2}$ of the field B2 is read out. At this instant the delay-means section 95.4 does not contain any useful information and the delay-means section 95.3 contains the block $F_{i-1}$ (see also Fig. 7c, the shaded block above $F_{i-1}$ and the block $F_{i-1}$ itself). Before the information is advanced one position in the delay means 95 and the block $F_{i-2}$ is shifted into the delay-means section 95.1 the switching means 98 are set tothe lowest position but one. If the information is now advanced in the delay meansunder the influence of the control signal 108, the block $F_{i-1}$ appearing on the tapping 96.3 is applied to the terminal 50 via the switching means 98, 100 and 48. Subsequently, the switching means 98 are set to the upper position and the block $S_{i-1}$ of the field B2 is read out and applied to the terminal 50. Subsequently, with the switching means 48 alternately in the upper position and the lower position, the signal blocks $S_i$ to $F_{j-3}$ of the field B1, which each time appear on the tapping 95.3, are combined with (inserted between) the blocks $S_i$ to $S_{j-3}$ of the field B2. At this instant the delay-means section 95.3 does not contain any (useful) information and the delay means section 95.2 contains the block $F_{j-2}$ (see also Fig. 7c), the shaded block above $F_{j-2}$ and the block $F_{j-2}$ itself). Before the next first signal block of the field B2 read from the record carrier is shifted into the delay means 95 the switching means 98 are set to the position in which the input 97.2 is coupled to the output 99. This means that while the information is advanced one position in the delay means the block $F_{j-1}$ appears on the terminal 50 via the tapping 96.2 and the switching means 98, 100 and 48. Subsequently, $S_{j-2}$ (B2), $F_{j-1}$ (B1), $S_{j-1}$ (B2), ... $F_{k-4}$ (B1), $S_{k-2}$ (B2) appears the parenthesized references indicating the field to which the relevant block belongs.

At this instant the delay-means section 95.2 does not contain any (useful) information and the last position of the delay-means section 95.1 contains the block $F_{k-3}$ (see also Fig. 7c, the hatched block above $F_{k-3}$ and the block $F_{k-3}$ itself). Before the information is advanced one position in the delay means 95 the switching means 98 are set to the upper position. When the information is shifted in the delay means 95 the block $F_{k-3}$ appears on the tapping 96.1, which block is applied to the terminal 50 via the switching means 98, 100 and 48. Subsequently, $S_{k-3}$ (B2), $F_{k-2}$ (B1), $S_{k-2}$ (B2), ..., $F_{n-4}$ (B1), $S_{n-4}$ (B2) appear on terminal 50.

After this, the switching means 100 are set to the upper position and the block $F_{n-3}$ (B1) is read out of the memory and applied to the terminal 50 via the switching means 100 and 48. Subsequently, $S_{n-3}$ (B2) is read out and applied to the terminal 50. After this, $S_{n-3}$ (B2) is read out and applied to the terminal 50. Subsequently $S_{n-3}$ (B2) is read out and applied to the terminal 50. Then $F_{n-2}$ (B1) is read out of the memory 42 and supplied to the terminal 50, followed by the block $S_{n-2}$ (B2). Now $F_{n-1}$ (B1) is read out of the memory 42 and applied to the terminal 50, followed by $S_{n-1}$ (B2). After $F_n$ (B1) has been read out of the memory 42 and applied to the terminal 50, $S_n$ (B2) is read from the record carrier and read into the memory 42. At this instant the signal blocks $F_1$ (B2) to $F_{n-4}$ (B2) are present in the delay means 95 and the signal blocks $F_{n-3}$ (B2) to $F_n$ (B2) are contained in the memory 42.

This process is repeated for successive fields. The circuit 109 may include a further delay means 110. This delay means may provide a delay of for example one field period. In that case first and second signal blocks of the same field are combined with each other.

Fig. 12 shows a read apparatus for carrying out the method as described with reference to Figs. 8b and 8c. The switching means 48 are in the upper position and subsequently the read head 31 reads the blocks $F_1$, $S_5$, $F_2$, $S_6$, ..., $F_{n-5}$, $S_{n-1}$ and $F_{n-4}$ from a track on the record carrier. These blocks are applied to the output terminal 50. Subsequently, the read head 31 reads the block $S_n$, containing the first signal blocks $F_{n-3}$ to $F_n$. Under the influence of the control signal $54''$ these blocks are loaded into the memory 42. Subsequently the change-over to the next write head 32 occurs during four line periods. During this change-over the control unit $56''$ supplies four times a control signal $54''$ to the memory 42, so that the blocks $F_{n-3}$, $F_{n-2}$, $F_{n-1}$ and $F_n$ appear on the output terminal 50 at the correct instants. Obviously, the switching means 48 are then in the lower position.

This process is repeated for succeeding fields.

## Claims

1. A method of recording and reading a video signal in/from tracks which are inclined relative to the longitudinal direction of a magnetic record carrier in the form of a tape by means of two or more write and read heads mounted on a rotatable head drum, the video signal comprising a sequence of lines with a first signal block ($F_i$) containing a line-synchronizing signal and a second signal block ($S_i$) containing the chrominance and luminance information of the video signal, the first signal blocks containing at least one additional signal in addition to the line-synchronizing signal, characterized in that during recording at least the additional signal in a specific first signal block is stored in a memory (11) and is subsequently accommodated in one or more second signal blocks ($S_n$) associated with one or more non-relevant lines in the video signal, after which said second signal block(s) is (are) recorded in a track on the record carrier, and in that during reading the additional signal is extracted from the relevant second signal block(s) ($S_n$) read from the track and is stored in a memory (42) after which the additional signal is re-inserted into the relevant first signal block.

2. A method as claimed in Claim 1, characterized in that during recording at least the additional signal in a specific first signal block ($F_j$), during which the change-over from recording with one write head to recording with another write head occurs, is stored in the memory (11) and is subsequently accommodated in the relevant second signal block(s) ($S_n$) and in that during reading at least the first signal blocks read from the tracks are delayed by a time interval T, after which the additional signal is re-inserted into the relevant first signal block ($F_j$).

3. A method as claimed in Claim 2, for recording a video signal on a magnetic record carrier, in which during one field only one change-over from recording with one write head to recording with another write head is effected, characterized in that during recording at least the additional signals of those first signal blocks ($F_1$-$F_4$) associated with the successive x lines during which a change-over is effected are stored in a memory and are subsequently accommodated in one or more specific second signal blocks ($S_5$) associated with one or more non-relevant lines in the video signal, after which they are recorded in a track on the record carrier (Fig 2a).

4. A method as claimed in Claim 2, for recording a video signal on a magnetic record carrier, in which during one field the change-over from recording with one write head to recording with another write head is effected m times, characterized in that during recording at least the additional signals ($F_1$, $F_i$, $F_j$, $F_k$) of those m first signal blocks during which the changing-over is effected are stored in a memory and are subsequently accommodated in one or more specific second signal blocks ($S_n$) associated with one or more non-relevant lines in the video signal, after which they are recorded in a track on the record carrier (Fig 1a).

5. A method as claimed in Claim 2, for reading a video signal recorded on a magnetic record carrier by means of the method as claimed in Claim 3, in which during one field only one change-over from reading by means of one read head to reading by means of another read head is effected, characterized in that during reading the x additional signals are extracted from the second signal block(s) ($S_5$) read from the relevant track and are stored in a memory, in that at least the first signal blocks ($F_5$, $F_6$,...) read from the tracks are delayed and the additional signals are re-inserted into the relevant x first signal blocks ($F_1$-$F_4$) (Fig 2b,c).

6. A method as claimed in Claim 5, characterized in that the first signal blocks read from the tracks are delayed by at least a time interval T equal to $(x + 1)t_1$, $t_1$ being the line period.

7. A method as claimed in Claim 2, for reading a video signal recorded on a magnetic record carrier by means of a method as claimed in Claim 4, in which during one field the change-over from reading by means of one read head to reading by means of another read head is effected m times, characterized in that during reading the m additional signals are extracted from the second signal block(s) $(S_n)$ read from the track and are stored in a memory, in that at least the first signal blocks $(F_2,..., F_{i-1}, F_{i+1},...)$ read from the track are delayed and the m additional signals are re-inserted into the associated m first signal blocks (Fig 1b,c).

8. A method as claimed in Claim 7, characterized in that the first signal blocks read from the tracks are delayed by at least a time interval T equal to $t_r$, where $t_r$ is the field period.

9. A method as claimed in Claim 1, characterized in that during the recording at least the additional signal in a first signal block during which switching over from recording with one write head to recording with another write head is effected, is delayed by one or more line periods and is subsequently accommodated in another first signal block and recorded on the record carrier, and in that the original additional first signal of said other first signal block is delayed and subsequently recorded on the record carrier.

10. A method as claimed in Claim 9, for recording a video signal on a magnetic record carrier, in which during one field only one change-over from recording by means of a one write head to recording by means of another write head is effected, characterized in that during recording the additional signals of those x first signal blocks $(F_1-F_4)$ associated with successive x lines during which the switching over is effected are delayed by at least x line periods and are subsequently accommodated in x other first signal blocks $(F_5-F_8)$, in that the additional signals of at least x subsequent first signal blocks $(F_{n-3}-Fn)$ of the field are stored in the memory and are subsequently accommodated in one or more second signal blocks associated with one or more non-relevant video lines $(S_n)$ (Fig 8a).

11. A method as claimed in Claim 9, for recording the video signal on a magnetic record carrier, in which during one field the change-over from recording with one head to recording with another head is effected m times, characterized in that during recording the additional signals of those m first signal blocks $(F_1, F_i, F_j, F_k)$ during which switching over is effected are delayed by at least one line period and are subsequently accommodated in m other first signal blocks in that the additional signals of at least m subsequent first signal blocks $(F_{n-3}-F_n)$ of the field are stored in the memory and are subsequently accommodated in one or more second signal blocks associated with one or more non-relevant video lines $(S_n)$ (Fig 7a).

12. A method as claimed in Claim 9, for reading a video signal recorded on a magnetic record carrier by means of the method as claimed in Claim 10, in which in each field only one change over from reading by means of one read head to reading by means of another read head is effected, characterized in that during reading the x additional signals are extracted from the relevant second signal block(s) $(S_n)$ read from the track, are stored in a memory and are subsequently re-inserted into the relevant x subsequent first signal blocks $(F_{n-3}-F_n)$ (Fig 8b).

13. A method as claimed in Claim 9, for reading a video signal recorded on a magnetic record carrier by means of the method as claimed in Claim 11 in which during one field the change-over from reading by means of one read to reading by means of another read head is effected m times, characterized in that during reading the m additional signals are extracted from the relevant second signal block(s) $(S_n)$ read from the track and are stored in a memory, after which the m additional signals are re-inserted into the associated m subsequent first signal blocks $(F_{n-3}-F_n)$ (Fig 7b,c).

14. An apparatus for recording a video signal in tracks which are inclined relative to the longitudinal direction of a magnetic record carrier in the form of a tape, for carrying out the method as claimed in any one of the Claims 2, 3, 4, 9, 10 and 11, comprising
   - an input terminal (1) for receiving the video signal, and
   - first switching means (2) having an input (3), two or more outputs (4, 5) and a control input (6), which first switching means are constructed to couple the input to one of the outputs under the influence of a first control signal applied to the control input, the input terminal being coupled to the input of the first switching means and each output of said switching means being coupled to an associated write head (7, 8), characterized in that the apparatus further comprises a memory (11) and second switching means (14), in that the memory is adapted to store the additional signal in said specific first signal block, in that an input (10) of the memory can be coupled to the input terminal, in that an output (12) of the memory is coupled to a first one (13) of two inputs of the second switching means, which have an output (16) coupled to the input (3) of the first switching means (2) (Fig 3, 4, 9, 10).

15. An apparatus as claimed in claim 14, for carrying out the method as claimed in claim 2, 3 or 4, characterized in that said specific first signal block is said first signal block ($F_i$) at the instant of switching over from recording with one write head to recording with another write head, that the memory (11) is adapted to store the additional signal contained in said first signal block under the influence of a control signal applied to a control input (21) of the memory in that the input (10) of the memory (11) is coupled to the input terminal (1) at least at the instant of switching over, and in that the second switching means (14) are adapted to couple one of the two inputs to the output (16) under the influence of a third control signal applied to a control input (18) of said second switching means (14) in such a way that the first input (13) is coupled to the output (16) at the instant at which the second signal block(s) ($S_n$) associated with the non-relevant line(s) in the video signal is (are) recorded (Fig 3, 4).

16. An apparatus as claimed in Claim 15, characterized in that the input terminal (1) is coupled to the second input (15) of the switching means (14).

17. An apparatus as claimed in Claim 15 or 16, for carrying out the method as claimed in Claim 3, characterized in that the memory (11) is adapted to store, under the influence of the control signal applied to its control input (21), the additional signals of those first signal blocks ($F_1$-$F_4$) associated with x successive lines during which switching over is effected.

18. An apparatus as claimed in Claim 15 or 16, for carrying out the method as claimed in Claim 4, characterized in that the memory is adapted to store, under the influence of the control signal applied to its control input, the additional signals of those m first signal blocks ($F_1$, $f_i$, $F_j$, $F_k$) during which switching over is effected.

19. An apparatus as claimed in claim 14, for carrying out the method as claimed in 9, 10 or 11, characterized in that specific first signal block is said other first signal block, that the memory is adapted to store the additional signal in said other first signal block under the influence of a second control signal applied to a control input of the memory, that at least at the instant at which a subsequent first signal block is applied to the input terminal, the input of the memory is coupled to said input terminal, in that the second switching means are adapted to couple one of the inputs to the output under the influence of a third control signal applied to a control input of said second switching means in such a way that the first input is coupled to the output at the instant of recording of one or more second signal blocks associated with one or more non-relevant lines in the video signal (Fig 9, 10).

20. An apparatus as claimed in Claim 19 for carrying out the method as claimed in Claim 10, characterized in that the memory is adapted to store the additional signal in said x subsequent first signal blocks, in that the input terminal is further coupled to an input of a delay means for delaying at least the x first signal blocks associated with the successive x lines during which switching over is effected, in that an output of the delay means is c oupled to a first input of third switching means, which have a second input coupled to the output of the memory and an output coupled to a first input of the second switching means, and in that the third switching means are adapted to couple one of the inputs to the output under the influence of a control signal applied to a control input of the third switching means.

21. An apparatus as claimed in Claim 19, for carrying out the method as claimed in Claim 11, characterized in that the memory is adapted to store the additional signals of said m subsequent first signal blocks, and in that the input terminal is further coupled to an input of a deelay means for delaying at least the m first signal blocks during which switching over is effected, in that the output of the memory is coupled to a first input of third switching means, which have an output coupled to the first input of the second switching means, in that the delay means comprises m tappings, each tapping being coupled to an associated input of the fourth switching means, which have an output coupled to a second input of the third switching means, and in that the third and the fourth switching means are adapted to couple one of the inputs to the output under the influence of a control signal applied to a control input of the third switching means and the fourth switching means respectively.

22. An apparatus for reproducing a video signal from tracks which are inclined relative to the longitudinal direction of a magnetic record carrier in the form of a tape, for carrying out the method as claimed in any one of the Claims 2, 5, 6, 7, 8, 9, 12, 13 comprising
    - two or more readheads (31, 32),
    - first switching means (33) having two or more inputs (34, 35), an output (36) and a control input (37), which first switching means are constructed to couple one of its inputs to its output under the influence of a first control signal applied to the control input,
    - an output terminal (50) for applying the video signal, characterized in that the apparatus further comprises a memory (42) and second switching means (48), in that the memory is constructed to store, under the influence of a second control signal applied to a control input (55) of the memory, the additional signal accommodated in the relevant second signal block(s) read from the track, in that the output (44) of the memory (42) is coupled to a first one (46) of two inputs of the second switching means (48), whose output (49) is coupled to the output terminal (50), and in that the second switching means are adapted to couple one of the inputs to the output under the influence of a control signal applied to a control input (53) of said second switching means (Fig 5, 6, 11, 12).

23. An apparatus as claimed in claim 22 for carrying out the method as claimed in Claim 2, 5, 6, 7 or 8, characterized in that the apparatus further comprises a delay means (43), in that purpose an input (40) of the memory (42) is coupled to the output (36) of the first switching means (33) at least at the instant at which the relevant second signal block(s) is (are) read, in that at least at the instant at which the first signal blocks are read an input (41) of the delay means is coupled to the output (36) of the first switching means (33), in that the outputs of the memory (42) and the delay means (43) are coupled respectively to a first input (46) and a second input (47) of the second switching means (48), and in that the second switching means are adapted to couple one of its inputs to its output (49) under the influence of a third control signal applied to a control input (53) of said second switching means in such a way that the first input (46) is coupled to the output (49) during the time of switching over, delayed by the time interval T, from reading with one read head (31) to reading with another read head (32) (Fig 5, 6).

24. An apparatus as claimed in Claim 23, characterized in that the output (49) of the second switching means (48) is coupled to the output terminal (50).

25. An apparatus as claimed in Claim 23, characterized in that the output (36) of the first switching means (33) is coupled to an input (59) of the third switching means (58) which have a first output (60) and a second output (61) coupled to the inputs of the memory (42) and the delay means (43) respectively, in that the output (49) of the second switching means (48) is coupled to a first input (65) of fourth switching means (64), which have a second input (66) coupled to the first output (60) of the third switching means (58), and in that an output (67) of the fourth switching means (64) is coupled to the output terminal (50), in that the third switching means (58) are adapted to couple the input to one of the outputs under the influence of a fourth control signal applied to a control input (62) of the third switching means, in that the fourth switching means (64) are adapted to couple one of the inputs to the output under the influence of a fifth control signal applied to a control input (68) of the fourth switching means, and in that the input (59) and the first output (60) of the third switching means (58) are coupled to each other during reading of the second signal blocks (Fig 6).

26. An apparatus as claimed in Claim 23, 24 or 25, for carrying the method as claimed in Claim 5, characterized in that the memory is adapted to store under the influence of the control signal applied to its control input, the x additional signals contained in the relevant second signal block(s) read from the track, and in that the second switching means (48) are adapted in such a way that during the switching over time, delayed by the time interval T, the first input (46) is coupled to the output (49).

27. An apparatus as claimed in Claim 23, 24 or 25, for carrying the method as claimed in Claim 7, characterized in that the memory is adapted to store,under the influence of the control signal applied to its control input, the m additional signals contained in the relevant second signal block(s) read from the track, and in that the second switching means are adapted in such a way that during a field the first input is coupled to the output during the m switching-over times, delayed by the time interval T (Fig 6).

28. An apparatus as claimed in Claim 25, or 26 and 27 when appendant to Claim 25, in which the signal contained in the second signal blocks is an analog signal, characterizedin that another delay means (74) is arranged between the first output (60) of the third switching means (58) and the first input (66) of fourth switching means (64), which further delay means provides a delay substantially equal to the delay time of the first-mentioned delay means (42).

29. An apparatus as claimed in claim 22, for carrying out the method as claimed in Claim 9, 12 or 13, characterized in that at least at the instant at which the relevant second signal block(s) is (are) read, an input of the memory is coupled to the output of the first switching means, and in that the second switching means (48) are adapted to couple one of the inputs to the output under the influence of a control signal applied to a control input (53) of said second switching means in such a way that the first input (47) is coupled to the output (49) at the instant at which the additional signal is inserted into the relevant subsequent first signal block (Fig 11, 12).

30. An apparatus as claimed in Claim 29, for carrying out the method as claimed in Claim 12, characterized in that the memory (42) is adapted to store the x additional signals accommodated in the relevant second signal block(s) read from the track, and in that the second input (46) is coupled to the output (36) of the first switching means (33).

31. An apparatus as claimed in Claim 29, for carrying out the method as claimed in Claim 13, characterized in that the memory is adapted to store the m additional signals accommodated in the relevant signal block(s) read from the track, in that the apparatus further comprises a delay means (95), third switching means (100) and fourth switching means (98), in that the output (36) of the first switching means (33) is coupled both to the second input (46) of the second switching means (48) and to an input of the delay means (95), in that the output (44) of the memory (42) is coupled to a first input (102) of the third switching means (100), whose output (103) is coupled to the firstinput (47) of the second switching means (48), and in that the delay means (95) comprises m tappings (96.1-97.4), each tapping being coupled to an associated input (97.1-97.4) of the fourth switching means (98), which have an output (99) coupled to the second input (101) of the third switching means (100), and in that the third switching means (100) and the fourth switching means (98) are adapted to couple one of the inputs to the output under the influence of a control signal applied to a control input (104, 107) of the third switching means and the fourth switching means respectively (Fig 11).

32. An apparatus as claimed in Claim 30 or 31, characterized in that another delay means (110) is arranged before the second input (46) of the second switching means (40) (Fig 11).

33. A magnetic record carrier obtained by means of the method as claimed in Claim 1, 2, 3, 9, 10 or 11, containing a video signal comprising a sequence of lines with a first ($F_i$) and a second signal block ($S_i$) in tracks which are inclined relative to the longitudinal direction of the record carrier, characterized in that at least one second signal block ($S_n$) contains an additional signal of at least one first signal block ($F_i$) of the field.

**Revendications**

1. Procédé d'enregistrement et de lecture d'un signal vidéo sur/depuis des pistes qui sont inclinées par rapport à la direction longitudinale d'un support d'enregistrement magnétique ayant la forme d'une bande, au moyen de deux ou de plus de deux têtes d'écriture et de lecture montées sur un tambour porte-têtes rotatif, le signal vidéo comprenant une séquence de lignes comportant chacune un premier bloc de signaux ($F_i$) contenant un signal de synchronisation de ligne et un second bloc de signaux ($S_i$) contenant les informations de chrominance et de luminance du signal vidéo, les premiers blocs de signaux contenant au moins un signal supplémentaire en plus du signal de synchronisation de ligne, caractérisé en ce que, pendant l'enregistrement, au moins le signal supplémentaire dans un premier bloc de signaux spécifique est stocké dans une mémoire (11) et est par après accueilli dans un ou plusieurs seconds blocs de signaux ($S_n$) associés à une ou plusieurs lignes non pertinentes dans le signal vidéo, après quoi le ou les seconds blocs de signaux est ou sont enregistrés dans une piste sur le support d'enregistrement, et que, pendant la lecture, le signal supplémentaire est extrait du ou des seconds blocs de signaux pertinents ($S_n$) obtenus par lecture de la piste et est stocké dans une mémoire (42), après quoi le signal supplémentaire est réintroduit dans le premier bloc de signaux pertinent.

2. Procédé suivant la revendication 1, caractérisé en ce que, pendant l'enregistrement, au moins le signal supplémentaire dans un premier bloc de signaux spécifique ($F_j$), pendant lequel la commutation de l'enregistrement avec une tête d'écriture à l'enregistrement avec une autre tête d'écriture se produit, est stocké dans la mémoire (11) et est par après accueilli dans le ou les seconds blocs de signaux pertinents ($S_n$) et que, pendant la lecture, au moins les premiers blocs de signaux, obtenus par lecture des pistes, sont retardés d'un intervalle de temps T, après quoi le signal supplémentaire est réintroduit dans le premier bloc de signaux pertinent ($F_j$).

3. Procédé suivant la revendication 2 pour l'enregistrement d'un signal vidéo sur un support d'enregistrement magnétique, dans lequel, pendant une trame, une seule commutation de l'enregistrement avec une tête d'écriture à l'enregistrement avec une autre tête d'écriture est effectuée, caractérisé en ce que, pendant l'enregistrement, au moins les signaux supplémentaires des premiers blocs de signaux ($F_1$ à $F_4$) associés aux x lignes successives pendant lesquelles une commutation est effectuée, sont stockés dans une mémoire et sont par après accueillis dans un ou plusieurs seconds blocs de signaux spécifiques ($S_5$) associés à une ou plusieurs lignes non pertinentes dans le signal vidéo, après quoi ils sont enregistrés dans une piste sur le support d'enregistrement (Fig. 2a).

4. Procédé suivant la revendication 2 pour l'enregistrement d'un signal vidéo sur un support d'enregistrement magnétique, dans lequel, pendant une trame, la commutation de l'enregistrement avec une tête d'écriture à l'enregistrement avec une autre tête d'écriture est effectuée m fois, caractérisé en ce que pendant l'enregistrement, au moins les signaux supplémentaires ($F_1$, $F_i$, $F_j$, $F_k$) de ces m premiers blocs de signaux pendant lesquels la commutation est effectuée, sont stockés dans une mémoire et sont par après accueillis dans un ou plusieurs seconds blocs de signaux spécifiques ($S_n$) associés à une ou plusieurs lignes non pertinentes dans le signal vidéo, après quoi ils sont enregistrés dans une piste sur le support d'enregistrement (Fig. 1a).

5. Procédé suivant la revendication 2 pour la lecture d'un signal vidéo enregistré sur un support d'enregistrement magnétique à l'aide du procédé suivant la revendication 3, dans lequel, pendant une trame, une seule commutation de la lecture à l'aide d'une tête de lecture à la lecture à l'aide d'une autre tête de lecture est effectuée, caractérisé en ce que pendant la lecture, les x signaux supplémentaires sont extraits du ou des seconds blocs de signaux ($S_5$) obtenus par lecture de la piste pertinente et sont stockés dans une mémoire, et qu'au moins les premiers blocs de signaux ($F_5$, $F_6$, ...) obtenus par lecture des pistes sont retardés et les signaux supplémentaires sont réintroduits dans les x premiers blocs de signaux ($F_1$-$F_4$) pertinents (Fig. 2b, c).

6. Procédé suivant la revendication 5, caractérisé en ce que les premiers blocs de signaux obtenus par lecture des pistes sont retardés d'au moins un intervalle de temps T égal à $(x + 1)t_1$, $t_1$ étant la période de ligne.

7. Procédé suivant la revendication 2 pour la lecture d'un signal vidéo enregistré sur un support d'enregistrement magnétique à l'aide d'un procédé suivant la revendication 4, dans lequel, pendant une trame, la commutation de la lecture à l'aide d'une tête de lecture à la lecture à l'aide d'une autre tête de lecture est effectuée m fois, caractérisé en ce que, pendant la lecture, les m signaux supplémentaires sont extraits du ou des seconds blocs de signaux ($S_n$) obtenus par lecture de la piste et sont stockés dans une mémoire, qu'au moins les premiers blocs de signaux ($F_2$, ..., $F_{i-1}$, $F_{i+1}$, ...) obtenus par lecture de la piste sont retardés et que les m signaux supplémentaires sont réintroduits dans les m premiers blocs de signaux associés (Fig. 1b, c).

8. Procédé suivant la revendication 7, caractérisé en ce que les premiers blocs de signaux obtenus par lecture des pistes sont retardés d'au moins un intervalle de temps T égal à $t_r$, où $t_r$ est la période de trame.

9. Procédé suivant la revendication 1, caractérisé en ce que, pendant l'enregistrement, au moins le signal supplémentaire dans un premier bloc de signaux, pendant lequel la commutation de l'enregistrement avec une tête d'écriture à l'enregistrement avec une autre tête d'écriture est effectuée, est retardé d'une ou de plusieurs périodes de ligne et est par après accueilli dans un autre premier bloc de signaux et enregistré sur le support d'enregistrement, et que le premier signal supplémentaire initial de cet autre premier bloc de signaux est retardé et, par après, enregistré sur le support d'enregistrement.

10. Procédé suivant la revendication 9 pour l'enregistrement d'un signal vidéo sur un support d'enregistrement magnétique, dans lequel, pendant une trame, une seule commutation de l'enregistrement à l'aide d'une tête d'écriture à l'enregistrement à l'aide d'une autre tête d'écriture est effectuée, caractérisé en ce que, pendant l'enregistrement, les signaux supplémentaires des x premiers blocs de signaux ($F_1$ à $F_4$) associés à x lignes successives pendant lesquelles la commutation est effectuée, sont retardés d'au moins x périodes de ligne et sont par après accueillis dans x autres premiers blocs de signaux ($F_5$ à $F_8$), que les signaux supplémentaires d'au moins x premiers blocs de signaux ultérieurs ($F_{n-3}$ à $F_n$) de la trame sont stockés dans la mémoire et qu'ils sont par après accueillis dans un ou plusieurs seconds blocs de signaux associés à une ou plusieurs lignes vidéo ($S_n$) non pertinentes (Fig. 8a).

11. Procédé suivant la revendication 9 pour l'enregistrement du signal vidéo sur un support d'enregistrement magnétique, dans lequel, pendant une trame, la commutation de l'enregistrement avec une tête à un enregistrement avec une autre tête est effectuée m fois, caractérisé en ce que, pendant l'enregistrement, les signaux supplémentaires de ces m premiers blocs de signaux ($F_1$, $F_i$, $F_j$, $F_k$) pendant lesquels la commutation est effectuée, sont retardés d'au moins une période de ligne et sont, par après, accueillis dans m autres premiers blocs de signaux, que les signaux supplémentaires d'au moins m premiers blocs de signaux suivants ($F_{n-3}$ à $F_n$) de la trame sont stockés dans la mémoire et sont, par après, accueillis dans un ou plusieurs seconds blocs de signaux associés à une ou plusieurs lignes vidéo ($S_n$) non pertinentes (Fig. 7a).

12. Procédé suivant la revendication 9 pour la lecture d'un signal vidéo enregistré sur un support d'enregistrement magnétique à l'aide du procédé suivant la revendication 10, dans lequel, dans chaque trame, une seule commutation de la lecture à l'aide d'une tête de lecture à la lecture à l'aide d'une autre tête de lecture est effectuée, caractérisé en ce que, pendant la lecture, les x signaux supplémentaires sont extraits du ou des seconds blocs de signaux ($S_n$) pertinents obtenus par lecture de la piste, sont stockés dans une mémoire et sont, par après, réintroduits dans les x premiers blocs de signaux suivants ($F_{n-3}$ à $F_n$) pertinents (Fig. 8b).

13. Procédé suivant la revendication 9 pour la lecture d'un signal vidéo enregistré sur un support d'enregistrement magnétique à l'aide du procédé suivant la revendication 11, dans lequel, pendant une trame, la commutation de la lecture à l'aide d'une tête de lecture à la lecture à l'aide d'une autre tête de lecture est effectuée m fois, caractérisé en ce que, pendant la lecture, les m signaux supplémentaires sont extraits du ou des seconds blocs de signaux ($S_n$) pertinents obtenus par lecture de la piste et sont stockés dans une mémoire, après quoi les m signaux supplémentaires sont réintroduits dans les m premiers blocs de signaux ($F_{n-3}$ à $F_n$) associés suivants (Fig. 7b, c).

14. Appareil pour l'enregistrement d'un signal vidéo dans des pistes qui sont inclinées par rapport à la direction longitudinale d'un support d'enregistrement magnétique ayant la forme d'une bande pour exécuter le procédé suivant l'une quelconque des revendications 2, 3, 4, 9, 10 et 11, comprenant :

   - une borne d'entrée (1) pour recevoir le signal vidéo, et

   - des premiers moyens de commutation (2) comportant une entrée (3), deux ou plus de deux sorties (4, 5) et une entrée de commande (6), ces premiers moyens de commutation étant construits de manière à coupler l'entrée à une des sorties sous l'influence d'un premier signal de commande appliqué à l'entrée de commande, la borne d'entrée étant couplée à l'entrée des premiers moyens de commutation et chaque sortie des moyens de commutation étant couplée à une tête d'écriture (7, 8) associée,

   caractérisé en ce qu'il comprend, en outre, une mémoire (11) et des deuxièmes moyens de commutation (14), que la mémoire est à même de stocker le signal supplémentaire dans le premier bloc de signaux spécifique, qu'une entrée (10) de la mémoire peut être couplée à la borne d'entrée, qu'une sortie (12) de la mémoire est couplée à une première (13) de deux entrées des deuxièmes moyens de commutation qui comportent une sortie (16) couplée à l'entrée (3) des premiers moyens de commutation (2) (Fig. 3, 4, 9, 10).

15. Appareil suivant la revendication 14 pour exécuter le procédé suivant la revendication 2, 3 ou 4, caractérisé en ce que le premier bloc de signaux spécifique est le premier bloc de signaux ($F_i$) à l'instant de la commutation de l'enregistrement avec une tête d'écriture à l'enregistrement avec une autre tête d'écriture, que la mémoire (11) est à même de stocker le signal supplémentaire contenu dans le premier bloc de signaux sous l'influence d'un signal de commande appliqué à une entrée de commande (21) de cette mémoire, que l'entrée (10) de la mémoire (11) est couplée à la borne d'entrée (1) au moins à l'instant de la commutation et que les deuxièmes moyens de commutation (14) sont à même de coupler une des deux entrées à la sortie (16) sous l'influence d'un troisième signal de commande appliqué à une entrée de commande (18) des deuxièmes moyens de commutation (14), d'une manière telle que la première entrée (13) soit couplée à la sortie (16) à l'instant où le ou les seconds blocs de signaux ($S_n$) associés à la ou aux lignes non pertinentes dans le signal vidéo est ou sont
enregistrés (Fig. 3, 4).

16. Appareil suivant la revendication 15, caractérisé en ce que la borne d'entrée (1) est couplée à la seconde entrée (15) des moyens de commutation (14).

17. Appareil suivant la revendication 15 ou 16 pour exécuter le procédé suivant la revendication 3, caractérisé en ce que la mémoire (11) est à même de stocker, sous l'influence du signal de commande appliqué à son entrée de commande (21), les signaux supplémentaires des premiers blocs de signaux ($F_1$ à $F_4$) associés à x lignes successives pendant lesquelles la commutation est effectuée.

18. Appareil suivant la revendication 15 ou 16 pour exécuter le procédé suivant la revendication 4, caractérisé en ce que la mémoire est à même de stocker, sous l'influence du signal de commande appliqué à son entrée de commande, les signaux supplémentaires des m premiers blocs de signaux ($F_1$, $F_i$, $F_j$, $F_k$) pendant lesquels la commutation est effectuée.

19. Appareil suivant la revendication 14 pour exécuter le procédé suivant la revendication 9, 10 ou 11, caractérisé en ce qu'un premier bloc de signaux spécifique est ledit autre premier bloc de signaux, que la mémoire est à même de stocker le signal supplémentaire dans ledit autre premier bloc de signaux sous l'influence d'un second signal de commande appliqué à une entrée de commande de la mémoire, qu'au moins à l'instant où un premier bloc de signaux suivants est appliqué à la borne d'entrée, l'entrée de la mémoire est couplée à cette borne d'entrée, que les deuxièmes moyens de commutation sont à même de coupler une des entrées à la sortie sous l'influence d'un troisième signal de commande appliqué à une entrée de commande de ces deuxièmes moyens de commutation, d'une manière telle que la première entrée soit couplée à la sortie à l'instant de l'enregistrement d'un ou de plusieurs seconds blocs de signaux associés à une ou plusieurs lignes non pertinentes dans le signal vidéo (Fig. 9, 10).

20. Appareil suivant la revendication 19 pour l'exécution du procédé suivant la revendication 10, caractérisé en ce que la mémoire est à même de stocker le signal supplémentaire dans les x premiers blocs de signaux suivants, que la borne d'entrée est couplée, en outre, à une entrée d'un moyen à retard destiné à retarder au moins les x premiers blocs de signaux associés aux x lignes successives pendant lesquelles la commutation est effectuée, qu'une sortie du moyen à retard est couplée à une première entrée de troisièmes moyens de commutation qui comportent une seconde entrée couplée à la sortie de la mémoire et une sortie couplée à une première entrée des deuxièmes moyens de commutation et que les troisièmes moyens de commutation sont à même de coupler une des entrées à la sortie sous l'influence d'un signal de commande appliqué à une entrée de commande des troisièmes moyens de commutation.

21. Appareil suivant la revendication 19 pour l'exécution du procédé suivant la revendication 11, caractérisé en ce que la mémoire est à même de stocker les signaux supplémentaires des m premiers blocs de signaux suivants et que la borne d'entrée est couplée, en outre, à une entrée d'un moyen à retard pour retarder au moins les m premiers blocs de signaux pendant lesquels la commutation est effectuée, que la sortie de la mémoire est couplée à une première entrée de troisièmes moyens de commutation qui comportent une sortie couplée à la première entrée des deuxièmes moyens de commutation, que le moyen à retard comprend m prises, chaque prise étant couplée à une entrée associée des quatrièmes moyens de commutation qui comportent une sortie couplée à une seconde entrée des troisièmes moyens de commutation et que les troisièmes et les quatrièmes moyens de commutation sont à même de coupler une des entrées à la sortie sous l'influence d'un signal de commande appliqué à une entrée de commande, respectivement, des troisièmes et des quatrièmes moyens de commutation.

22. Appareil pour reproduire un signal vidéo à partir de pistes qui sont inclinées par rapport à la direction longitudinale d'un support d'enregistrement magnétique ayant la forme d'une bande pour l'exécution du procédé suivant l'une quelconque des revendications 2, 5, 6, 7, 8, 9, 12, 13 comprenant :

- deux ou plus de deux têtes de lecture (31, 32),

- des premiers moyens de commutation (33) comportant deux ou plus de deux entrées (34, 35), une sortie (36) et une entrée de commande (37), ces premiers moyens de commutation étant construits pour coupler une de leurs entrées à leur sortie sous l'influence d'un premier signal de commande appliqué à l'entrée de commande,

- une borne de sortie (50) pour appliquer le signal vidéo,

caractérisé en ce qu'il comprend, en outre, une mémoire (42) et des deuxièmes moyens de commutation (48), que la mémoire est construite pour stocker, sous l'influence d'un second signal de commande appliqué à une entrée de commande (55) de cette mémoire, le signal supplémentaire accueilli dans le ou les seconds blocs de signaux pertinents obtenus par lecture de la piste, que la sortie (44) de la mémoire (42) est couplée à une première (46) de deux entrées des deuxièmes moyens de commutation (48) dont la sortie (49) est couplée à la borne de sortie (50) et que les deuxièmes moyens de commutation sont à même de coupler une des entrées à la sortie sous l'influence d'un signal de commande appliqué à une entrée de commande (53) de ces deuxièmes moyens de commutation (Fig. 5, 6, 11, 12).

23. Appareil suivant la revendication 22 pour l'exécution du procédé suivant la revendication 2, 5, 6, 7 ou 8, caractérisé en ce qu'il comprend, en outre, un moyen à retard (43), qu'une entrée (40) de la mémoire (42) est couplée à la sortie (36) des premiers moyens de commutation (33) au moins à l'instant où le ou les seconds blocs de signaux pertinents est ou sont lus, qu'au moins à l'instant où les premiers blocs de signaux sont lus, une entrée (4l) du moyen à retard est couplée à la sortie (36) des premiers moyens de commutation (33), que les sorties de la mémoire (42) et du moyen à retard (43) sont couplées, respectivement, à une première entrée (46) et à une seconde entrée (47) des deuxièmes moyens de commutation (48) et que les deuxièmes moyens de commutation sont à même de coupler une de leurs entrées à leur sortie (49) sous l'influence d'un troisième signal de commande appliqué à une entrée de commande (53) des deuxièmes moyens de commutation d'une manière telle que la première entrée (46) soit couplée à la sortie (49) pendant le temps de commutation, retardé de l'intervalle de temps T, de la lecture avec une tête de lecture (3l) à la lecture avec une autre tête de lecture (32) (Fig. 5, 6).

24. Appareil suivant la revendication 23, caractérisé en ce que la sortie (49) des deuxièmes moyens de commutation (48) est couplée à la borne de sortie (50).

25. Appareil suivant la revendication 23, caractérisé en ce que la sortie (36) des premiers moyens de commutation (33) est couplée à une entrée (59) des troisièmes moyens de commutation (58) qui comportent une première sortie (60) et une seconde sortie (61) couplées, respectivement, aux entrées de la mémoire (42) et du moyen à retard (43), que la sortie (49) des deuxièmes moyens de commutation (48) est couplée à une première entrée (65) de quatrièmes moyens de commutation (64) qui comportent une seconde entrée (66) couplée à la première sortie (60) des troisièmes moyens de commutation (58) et qu'une sortie (67) des quatrièmes moyens de commutation (64) est couplée à la borne de sortie (50), que les troisièmes moyens de commutation (58) sont à même de coupler l'entrée à une des sorties sous l'influence d'un quatrième signal de commande appliqué à une entrée de commande (62) des troisièmes moyens de commutation, que les quatrièmes moyens de commutation (64) sont à même de coupler une des entrées à la sortie sous l'influence d'un cinquième signal de commande appliqué à une entrée de commande (68) des quatrièmes moyens de commutation et que l'entrée (59) et la première sortie (60) des troisièmes moyens de commutation (58) sont couplées l'une à l'autre pendant la lecture des seconds blocs de signaux (Fig. 6).

26. Appareil suivant la revendication 23, 24 ou 25 pour l'exécution du procédé suivant la revendication 5, caractérisé en ce que la mémoire est à même de stocker, sous l'influence du signal de commande appliqué à son entrée de commande, les x signaux supplémentaires contenus dans le ou les seconds blocs de signaux pertinents obtenus par lecture de la piste, et que les deuxièmes moyens de commutation (48) sont agencés d'une manière telle que pendant le temps de commutation retardé de l'intervalle de temps T, la première entrée (46) soit couplée à la sortie (49).

27. Appareil suivant la revendication 23, 24 ou 25 pour l'exécution du procédé suivant la revendication 7, caractérisé en ce que la mémoire est à même de stocker, sous l'influence du signal de commande appliqué à son entrée de commande, les m signaux supplémentaires contenus dans le ou les seconds blocs de signaux pertinents obtenus par lecture de la piste, et que les deuxièmes moyens de commutation sont agencés d'une manière telle que, pendant une trame, la première entrée soit couplée à la sortie pendant les m temps de commutation, retardés de l'intervalle de temps T (Fig. 6).

28. Appareil suivant les revendications 25, ou 26 et 27 découlant de la revendication 25, dans lequel le signal contenu dans les seconds blocs de signaux est un signal analogique, caractérisé en ce qu'un autre moyen à retard (74) est prévu entre la première sortie (60) des troisièmes moyens de commutation (58) et la première entrée (66) de quatrièmes moyens de commutation (64), cet autre moyen à retard fournissant un retard en substance égal à celui du premier moyen à retard (42).

29. Appareil suivant la revendication 22 pour l'exécution du procédé suivant la revendication 9, 12 ou 13, caractérisé en ce que, au moins à l'instant où le ou les seoonds blocs de signaux pertinents est ou sont lus, une entrée de la mémoire est couplée à la sortie des premiers moyens de commutation et que les deuxièmes moyens de commutation (48) sont à même de coupler une des entrées à la sortie sous l'influence d'un signal de commande appliqué à une entrée de commande (53) des deuxièmes moyens de commutation, d'une manière telle que la première entrée (47) soit couplée à la sortie (49) à l'instant où le signal supplémentaire est introduit dans le premier bloc de signaux suivant pertinent (Fig. 11, 12).

30. Appareil suivant la revendication 29 pour l'exécution du procédé suivant la revendication 12, caractérisé en ce que la mémoire 42 est à même de stocker les x signaux supplémentaires accueillis dans le ou les seconds blocs de signaux pertinents obtenus par lecture de la piste et que la seconde entrée (46) est couplée à la sortie (36) des premiers moyens de commutation (33).

31. Appareil suivant la revendication 29 pour l'exécution du procédé suivant la revendication 13, caractérisé en ce que la mémoire est à même de stocker les m signaux supplémentaires accueillis dans le ou les blocs de signaux pertinents obtenus par lecture de la piste, que l'appareil comprend, en outre, un moyen à retard (95), des troisièmes moyens de commutation (100) et des quatrièmes moyens de commutation (98), que la sortie (36) des premiers moyens de commutation (33) est couplée à la fois à la seconde entrée (46) des deuxièmes moyens de commutation (48) et à une entrée du moyen à retard (95), que la sortie (44) de la mémoire (42) est couplée à une première entrée (102) des troisièmes moyens de commutation (100), dont la sortie (103) est couplée à la première entrée (47) des deuxièmes moyens de commutation (48) et que le moyen à retard (95) comprend m prises (96.1 à 96.4), chaque prise étant couplée à une entrée associée (97.1 à 97.4) des quatrièmes moyens de commutation (98) qui comportent une sortie (99) couplée à la seconde entrée (101) des troisièmes moyens de commutation (100) et que les troisièmes moyens de commutation (100) et les quatrièmes moyens de commutation (98) sont à même de coupler une des entrées à la sortie sous l'influence d'un signal de commande appliqué à une entrée de commande (104, 107), respectivement, des troisièmes et des quatrièmes moyens de commutation (Fig. 11).

32. Appareil suivant la revendication 30 ou 31, caractérisé en ce qu'un autre moyen à retard (110) est disposé en amont de la seconde entrée (46) des deuxièmes moyens de commutation (48) (Fig. 11).

33. Support d'enregistrement magnétique obtenu à l'aide du procédé suivant les revendications 1, 2, 3, 9, 10 ou 11, contenant un signal vidéo comprenant une séquence de lignes comportant chacune un premier bloc de signaux ($F_i$) et un second bloc de signaux ($S_i$) dans des pistes qui sont inclinées par rapport à la direction longitudinale du support d'enregistrement, caractérisé en ce qu'au moins un second bloc

de signaux ($S_n$) contient un signal supplémentaire d'au moins un premier bloc de signaux ($F_i$) de la trame.

## Ansprüche

1. Verfahren zum Aufzeichnen eines Videosignals in Spuren, oder zum lesen eines Videosignals aus Spuren, die in bezug auf die Längsrichtung eines bandförmigen magnetischen Aufzeichnungsträgers mittels zwei oder mehr Schreib- und Leseköpfe schräg auf dem Aufzeichnungsträger verlaufen, welcher Köpfe auf einer drehbaren Kopftrommel angeordnet sind, wobei das Videosignal aus einer Reihe von Zeilen aufgebaut ist, jede Zeite einen ersten Signalblock ($Fi$) mit einem Horizontalsynchronisationssignal und einen zweiter Signalblock ($Si$) mit der Chrominanz und Leuchtdichteinformation des Videosignals enthält, wobei die ersten Signalblöcke wenigstens ein Zusatzsignal zusätzlich zum Horizontalsynchronisationssignal enthält, dadurch gekennzeichnet, daß beim Aufzeichnen wenigstens das Zusatzsignal in einem spezifischen ersten Signalblock in einen Speicher (11) eingeschrieben und anschließend auf einen oder mehrere zweite Signalblöcke ($S_n$) übertragen wird, die einer oder mehreren nicht relevanten Zeilen im Videosignal zugeordnet sind, wonach dieses zweite Signalblock (oder diese Blöcke) in eine Spur auf dem Aufzeichnungsträger aufgezeichnet wird (werden), und daß beim lesen das Zusatzsignal vom betreffenden zweiten Signalblock (Blöcke) ($S_n$) abgeleitet wird, der (die) aus der Spur gelesen und in einen Speicher (42) eingeschrieben wird, wonach das Zusatzsignal in das betreffende erste Signalblock rückeingeführt wird.

2. Verfahren nach Anspruch 1, dadurch gekennzeichnet, daß beim Aufzeichnen wenigstens das Zusatzsignal in einem spezifischen ersten Signalblock ($F_i$), wobei der Übergang der Aufzeichnung mit einem Schreibkopf auf das Aufzeichnen mit einem anderen Schreibkopf erfolgt, im Speicher (11) gespeichert und anschließend in das betreffende zweite Signalblock ($S_n$) (oder Blöcke) aufgenommen wird, und daß beim Lesen wenigstens die aus den Spuren ausgelesenen ersten Signalblöcke um einen Zeitintervall T verzögert werden, wonach das Zusatzsignal in das betreffende erste Signalblock ($F_i$) rückeingeführt wird.

3. Verfahren nach Anspruch 2 zum Aufzeichnen eines Videosignals auf einem magnetischen Aufzeichnungsträger, wobei für die Dauer eines Halbbilds nur ein Übergang vom Aufzeichnen mit einem Schreibkopf auf das Aufzeichnen mit einem anderen Schreibkopf erfolgt, dadurch gekennzeichnet, daß beim Aufzeichnen wenigstens die Zusatzsignale der ersten den aufeinanderfolgenden x Zeilen zugeordneten ersten Signalblöcke ($F_1$-$F_4$), wahrend deren ein Übergang stattfindet, in einen Speicher eingeschrieben werden, und anschließend in einen oder mehrere spezifische zweite Signalblöcke ($S_5$) aufgenommen werden, die einer oder mehreren nicht relevanten Zeilen im Videosignal zugeordnet sind, wonach sie in eine Spur auf dem Aufzeichnungsträger aufgezeichnet werden (Fig. 2a).

4. Verfahren nach Anspruch 2 zum Aufzeichnen eines Videosignals auf einem magnetischen Aufzeichnungsträger, wobei für die Dauer eines Halbbildes der Übergang vom Aufzeichnen mit einem Schreibkopf auf das Aufzeichnen mit einem anderen Schreibkopf m-mal erfolgt, dadurch gekennzeichnet, daß beim Aufzeichnen wenigstens die Zusatzsignale ($F_1$, $F_i$, $F_j$, $F_k$) dieser m ersten Signalblöcke, wobei der Übertrag erfolgt, in einen Speicher eingeschrieben und anschließend in einen oder mehrere spezifische zweite Signalblöcke ($S_n$) aufgenommen werden, die einer oder mehreren nicht relevanten Zeilen im Videosignal zugeordnet sind, wonach sie in eine Spur auf dem Aufzeichnungsträger aufgezeichnet werden (Fig. 1a).

5. Verfahren nach Anspruch 2 zum Lesen eines auf einem magnetischen Aufzeichnungsträger aufgezeichneten Videosignals mit Hilfe des Verfahrens nach Anspruch 3, wobei während eines Halbbildes nur ein Übergang vom Lesen mittels eines Lesekopfes auf das Lesen mittels eines anderen Lesekopfes erfolgt, dadurch gekennzeichnet, daß beim Lesen die x Zusatzsignale dem zweiten Signalblock ($S_5$) (oder Blöcken) der (die) aus der betreffenden Spur ausgelesen ist (sind), entnommen und in einen Speicher eingeschrieben werden, daß wenigstens die ersten aus den Spuren ausgelesenen Signalblöcke ($F_5$, $F_6$...) verzögert und die Zusatzsignale in die betreffenden x ersten Signalblöcke ($F_1$ ... $F_4$) rückeingesetzt werden (Fig. 2b, c).

6. Verfahren nach Anspruch 5, dadurch gekennzeichnet, daß die ersten aus den Spuren ausgelesenen Signalblöcke um wenigstens ein Zeitintervall T gleich $(x+1)t_1$ verzögert werden, wobei $t_1$ die Zeilenperiode ist.

7. Verfahren nach Anspruch 2 zum Lesen eines auf einem magnetischen Aufzeichnungsträger aufgezeichneten Videosignals mit Hilfe eines im Anspruch 4 beschriebenen Verfahrens, wobei für die Dauer eines Halbbildes der Übergang vom Lesen mittels eines Lesekopfes auf das Lesen mittels eines anderen Lesekopfes m-mal erfolgt, dadurch gekennzeichnet, daß beim Lesen die m Zusatzsignale dem zweiten Signalblock ($S_n$) (oder Blöcken) der (die) aus der Spur ausgelesen ist (sind) entnommen werden (die) aus der Spur ausgelesen ist (sind) und in einen Speicher eingeschrieben werden, daß wenigstens die ersten aus der Spur ausgelesenen Signalblöcke ($F_2...F_{i-1},F_{i+1},...$) verzögert werden, und daß die m Zusatzsignale in die zugeordneten m ersten Signalblöcke rückeingesetzt werden (Fig. 1b, c).

8. Verfahren nach Anspruch 7, dadurch gekennzeichnet, daß die aus den Spuren ausgelesenen ersten Signalblöcke wenigstens um ein Zeitintervall T gleich $t_r$ verzögert werden, wobei $t_r$ die Halbbildperiode ist.

9. Verfahren nach Anspruch 1, dadurch gekennzeichnet, daß beim Aufzeichnen wenigstens das Zusatzsignal in einem ersten Signalblock, wobei das Umschalten vom Aufzeichnen mit einem Schreibkopf auf das Aufzeichnen mit einem anderen Schreibkopf erfolgt, um eine oder mehrere Zeilenperioden verzögert und anschließend in einen anderen ersten Signalblock aufgenommen und auf dem Aufzeichnungsträger aufgezeichnet wird, und daß das ursprüngliche erste Zusatzsignal des anderen ersten Signalblocks verzögert und anschließend auf dem Aufzeichnungsträger aufgezeichnet wird.

10. Verfahren nach Anspruch 9 zum Aufzeichnen eines Videosignals auf einem magnetischen Aufzeichnungsträger, wobei für die Dauer eines Halbbildes nur ein Ubergang vom Aufzeichnen mittels eines Schreibkopfs auf das Aufzeichnen mittels eines anderen Schreibkopfs erfolgt, dadurch gekennzeichnet, daß beim Aufzeichnen die Zusatzsignale dieser x ersten Signalblöcke ($F_1...F_4$), die aufeinanderfolgenden x Zeilen zugeordnet sind, während deren das Umschalten erfolgt, um wenigstens x Zeilenperioden verzögert und anschließend in x andere erste Signalblöcke ($F_5...F_8$) aufgenommen werden, daß die Zusatzsignale wenigstens x auffolgender erster Signalblöcke ($F_3...F_n$) des Halbbildes in den Speicher eingeschrieben und anschließend in einen oder mehrere zweite Signalblöcke aufgenommen werden, die einer oder mehreren nicht relevanten Videozeilen ($S_n$) zugeordnet sind (Fig. 8a).

11. Verfahren nach Anspruch 9 zum Aufzeichnen des Videosignals auf einem magnetischen Aufzeichnungsträger, wobei für die Dauer eines Halbbildes der Uebergang vom Aufzeichnen mit einem Kopf zum Aufzeichnen mit einem anderen Kopf m-mal erfolgt, dadurch gekennzeichnet, daß beim Aufzeichnen die Zusatzsignale dieser m ersten Signalblöcke ($F_1$, $F_i$, $F_j$, $F_k$), wobei das Umschalten erfolgt, um wenigstens eine Zeilenperiode verzögert und anschließend in m andere erste Signalblöcke aufgenommen werden, daß die Zusatzsignale wenigstens m aufeinanderfolgender erster Signalblöcke ($F_{n-3}... F_n$) des Halbbildes in den Speicher eingeschrieben und anschließend in einen oder mehrere zweite Signalblöcke aufgenommen werden, die einer oder mehreren nicht relevanten Videozeilen ($S_n$) zugeordnet sind (Fig. 7a).

12. Verfahren nach Anspruch 9 zum Lesen eines auf einem magnetischen Aufzeichnungsträger aufgezeichneten Videosignals mit Hilfe des Verfahrens nach Anspruch 10, wobei in jedem Halbbild nur ein Übergang vom Lesen mittels eines Lesekopfes auf das Lesen mittels eines anderen Lesekopfes erfolgt, dadurch gekennzeichnet, daß beim Lesen die x Zusatzsignale dem betreffenden aus der Spur ausgelesenen zweiten Signalblock ($S_n$) (oder Blöcken) entnommen werden, in einen Speicher eingeschrieben und anschließend in die betreffenden x auffolgenden ersten Signalblöcke ($F_{n-3}...F_n$) rückeingesetzt werden (Fig. 8b).

13. Verfahren nach Anspruch 9 zum Lesen eines auf einem magnetischen Aufzeichnungsträger aufgezeichneten Videosignals mit Hilfe des Verfahrens nach Anspruch 11, wobei für die Dauer eines Halbbildes der Uebergang vom Lesen mittels eines Lesekopfes zum Lesen mittels eines anderen Lesekopfes m-mal erfolgt, dadurch gekennzeichnet, daß beim Lesen die m Zusatzsignale dem betreffenden aus der Spur ausgelesenen zweiten Signalblock ($S_n$) (oder Blöcken) entnommen werden und in einen Speicher eingeschrieben werden, wonach die m Zusatzsignale in die zugeordneten m aufeinanderfolgenden ersten Signalblöcke ($F_{n-3}...F_n$) rückeingesetzt werden (Fig. 7b, c).

14. Gerät zum Aufzeichnen eines Videosignals in Spuren, die in bezug auf die Längsrichtung eines bandförmigen magnetischen Aufzeichnungsträgers schräg angeordnet sind, zur Durchführung des Verfahrens nach einem oder mehreren der Ansprüche 2, 3, 4, 9, 10 und 11, wobei dieses Gerät folgende Elemente enthält
- eine Eingangsklemme (1) zum Empfangen des Videosignals und
- erste Schaltmittel (2) mit einem Eingang (3), zwei oder mehrere Ausgänge (4,5) und einen Steuereingang (6), wobei diese ersten Schaltmittel zum Verbinden des Eingangs mit einem der Ausgänge unter dem Einfluß eines dem Steuereingang zugeführten ersten Steuersignals ausgelegt ist, wobei die Eingangsklemme mit dem Eingang der ersten Schaltmittel und jeder Ausgang dieser Schaltmittel mit einem zugeordneten Schreibkopf (7, 8) gekoppelt sind,
dadurch gekennzeichnet, daß das Gerät außerdem einen Speicher (11) und zweite Schaltmittel (14) enthält, daß der Speicher zum Einschreiben des Zusatzsignals das in den bestimmten ersten Signalblock ausgelegt ist, dass ein Eingang (10) des Speichers mit der Eingangsklemme koppelbar ist, dass ein Ausgang (12) des Speichers mit einem ersten (13) der zwei Eingänge der zweiten Schaltmittel gekoppelt ist, von denen ein Ausgang (16) mit dem Eingang (3) der ersten Schaltmittel (2) gekoppelt ist (Fig. 3, 4, 9, 10).

15. Gerät nach Anspruch 14 zum Durchführen des Verfahrens nach Anspruch 2,3 oder 4, dadurch gekennzeichnet, daß der bestimmte erste Signalblock der erste Signalblock ($F_i$) zum Zeitpunkt des Übergangs vom Aufzeichnen mit einem Schreibkopf auf das Aufzeichnen mit einem anderen Schreibkopf ist, daß der Speicher (11) zum Einschreiben des Zusatzsignals im ersten Signalblock unter dem Einfluß eines einem Steuereingang (21) des Speichers zugeführten Steuersignals ausgelegt ist, daß der Eingang (10) des Speichers (11) an die Eingangsklemme (1) wenigstens zum Zeitpunkt des Übergangs gekoppelt ist, und daß die zweiten Schaltmittel (14) zum Verbinden eines der beiden Eingänge zum Ausgang (16) unter dem Einfluß eines einem Steuereingang (18) der zweiten Schaltmittel (14) zugeführten dritten Steuersignals derart ausgelegt ist, daß der erste Eingang (13) mit dem Ausgang (16) zu dem Zeitpunkt verbunden ist, zu dem der zweite Signalblock ($S_n$) (oder Blöcken), der bzw. die der nicht relevanten Zeile im Videosignal (den nicht relevanten Zeilen) zugeordnet ist (sind), aufgezeichnet wird (werden) (Fig. 3,4).

16. Gerät nach Anspruch 15, dadurch gekennzeichnet, daß die Eingangsklemme (1) mit dem zweiten Eingang (15) der Schaltmittel (14) gekoppelt ist.

17. Gerät nach Anspruch 15 oder 16 zum Durchführen des Verfahrens nach Anspruch 3, dadurch gekennzeichnet, daß der Speicher (11) dazu ausgelegt ist, unterdem Einfluß des seinem Steuereingang (21) zugeführten Steuersignals die Zusatzsignale dieser ersten Signalblöcke ($F_1...F_4$) zu speichern, die x aufeinanderfolgenden Zeilen zugeordnet sind, während der der Übergang erfolgt.

18. Gerät nach Anspruch 15 oder 16 zum Durchführen des Verfahrens nach Anspruch 4, dadurch gekennzeichnet, daß der Speicher dazu ausgelegt ist, unter dem Einfluß des seinem Steuereingang zugeführten Steuersignals die Zusatzsignale jener m ersten Signalblöcke ($F_1$, $F_i$, $F_j$, $F_k$) einzuschreiben, während der der Übergang erfolgt.

19. Gerät nach Anspruch 14 zum Durchführen des Verfahrens nach Anspruch 9, 10 oder 11, dadurch gekennzeichnet, daß der bestimmte erste Signalblock der andere erste Signalblock ist, daß der Speicher zum Einschreiben des Zusatzsignals in den anderen ersten Signalblock unter dem Einfluß eines einem Steuereingang des Speichers zugeführten zweiten Stereo-Signals ausgelegt ist, dass wenigstens zum Zeitpunkt, zu dem ein folgender erster Signalblock an die Eingangsklemme gelangt, der Eingang des Speichers mit dieser Eingangsklemme gekoppelt wird, daß die zweiten Schaltmittel zum Verbinden eines der Eingänge mit dem Ausgang unter dem Einfluß eines einem Steuereingang dieser zweiten Schaltmittel zugeführten dritten Steuersignals derart ausgelegt sind, daß der erste Eingang zum Zeitpunkt des Aufzeichnens eines oder mehrerer zweiter Signalblöcke mit dem Ausgang die einer oder mehreren nicht relevanten Zeilen im Videosignal zugeordnet sind mit dem Ausgang verbunden ist. (Fig. 9, 10).

20. Gerät nach Anspruch 19 zum Durchführen des Verfahrens nach Anspruch 10, dadurch gekennzeichnet, daß der Speicher dazu ausgelegt ist, das Zusatzsignal zu speichern das in den x aufeinanderfolgenden ersten Signalblöcken enthalten ist daß die Eingangsklemme außerdem an einen Eingang eines Verzögerungsmittels zum Verzögern wenigstens der x ersten Signalblöcke gekoppelt ist, die den aufeinanderfolgenden x Zeilen zugeordnet sind, während der der Übergang erfolgt, daß ein Ausgang des Verzögerungsmittels mit einem ersten Eingang dritter Schaltmittel gekoppelt ist, von denen ein zweiter Eingang mit dem Ausgang des Speichers und ein Ausgang mit einem ersten Eingang der zweiten Schaltmittel gekoppelt ist, und daß die dritten Schaltmittel zum Verbinden eines der Eingänge mit dem Ausgang unter dem Einfluß eines einem Steuereingang der dritten Schaltmittel zugeführten Steuersignals ausgelegt sind.

21. Gerät nach Anspruch 19 zum Durchführen des Verfahrens nach Anspruch 11, dadurch gekennzeichnet, daß der Speicher dazu ausgelegt ist, die Zusatzsignale der m aufeinanderfolgenden ersten Signalblöcke zu speichern, und daß die Eingangsklemme außerdem mit einem Eingang eines Verzögerungsmittels zum Verzögern wenigstens der m ersten Signalblöcke gekoppelt ist, während der der Übergang erfolgt, daß der Ausgang des Speichers an einen ersten Eingang dritter Schaltmittel gekoppelt ist, von denen ein Ausgang mit dem ersten Eingang der zweiten Schaltmittel gekoppelt ist, daß die Verzögerungsmittel m Abzweige enthält, wobei jeder Abzweig mit einem zugeordneten Eingang der vierten Schaltmittel gekoppelt ist, von denen ein Ausgang mit einem zweiten Eingang der dritten Schaltmittel gekoppelt ist, und daß die dritten und die vierten Schaltmittel zum Verbinden eines der Eingänge mit dem Ausgang unter dem Einfluß eines einem Steuereingang der dritten Schaltmittel und der vierten Schaltmittel zugeführten Steuersignals ausgelegt ist.

22. Gerät zum Auslesen eines Videosignals aus Spuren, die in bezug auf die Längsrichtung eines bandförmigen magnetischen Aufzeichnungsträgers schräg angeordnet sind, zur Durchführung des Verfahrens nach einem oder mehreren der Ansprüche 2, 5, 6, 7, 8, 9, 12, 13, wobei dieses Gerät folgende Elemente enthält
- zwei oder mehrere Leseköpfe (31, 32),
- erste Schaltmittel (33) mit zwei oder mehreren Eingängen (34, 35), einem Ausgang (36) und einem Steuereingang (37), wobei die ersten Schaltmittel zur Verbindung eines ihrer Eingänge mit ihrem Ausgang unter dem Einfluß eines dem Steuereingang zugeführten ersten Steuersignals ausgelegt ist,
- eine Ausgangsklemme (50) zum Anlegen des Videosignals, dadurch gekennzeichnet, daß das Gerät außerdem einen Speicher (42) und zweite Schaltmittel (48) enthält, daß der Speicher dazu ausgelegt ist, unter dem Einfluß eines einem Steuereingang (55) des Speichers zugeführten zweiten Steuersignals das im betreffenden zweiten Signalblock (Blöcken) befindliche und aus der Spur ausgelesene Zusatzsignal zu speichern, daß der Ausgang (44) des Speichers (42) mit einem ersten (46) von zwei Eingängen der zweiten Schaltmittel (48) gekoppelt ist, deren Ausgang (49) mit die Ausgangsklemme (50) gekoppelt ist, und daß die zweiten Schaltmittel zum Verbinden eines der Eingänge mit dem Ausgang unter dem Einfluß eines einem Steuereingang (53) der zweiten Schaltmittel zugeführten Steuersignals ausgelegt ist (Figur 5, 6, 11, 12).

23. Gerät nach Anspruch 22 zum Durchführen des Verfahrens nach Anspruch 2, 5, 6, 7 oder 8, dadurch gekennzeichnet, daß das Gerät außerdem ein Verzögerungsmittel (43) enthält, daß ein Eingang (40) des Speichers (42) mit dem Ausgang (36) der ersten Schaltmittel (33) wenigstens zum Zeitpunkt gekoppelt ist, zu dem der betreffende zweite Signalblock (Blöcke) gelesen wird (werden), daß wenigstens zu dem Zeitpunkt, zu dem die ersten Signalblöcke gelesen werden, ein Eingang (41) des Verzögerungsmittels mit dem Ausgang (36) der ersten Schaltmittel (33) gekoppelt ist, daß die Ausgänge des Speichers (42) und des Verzögerungsmittels (43) mit einem ersten Eingang (46) bzw. einem zweiten Eingang (47) der zweiten Schaltmittel (48) gekoppelt sind, und daß die zweiten Schaltmittel zum Verbinden eines ihrer Eingänge mit ihrem Ausgang (49) unter dem Einfluß eines einem Steuereingang (53) der zweiten Schaltmittel zugeführten dritten Steuersignals derart ausgelegt ist, daß der erste Eingang (46) mit dem Ausgang (49) für die Dauer des um das Zeitintervall T verzögerten Übergangs vom Lesen mit einem Lesekopf (31) auf das Lesen mit dem anderen Lesesekopf (32) verbunden ist (Fig. 5,6).

24. Gerät nach Anspruch 23, dadurch gekennzeichnet, daß der Ausgang (49) der zweiten Schaltmittel (48) mit der Ausgangsklemme (50) gekoppelt ist.

25. Gerät nach Anspruch 23, dadurch gekennzeichnet, daß der Ausgang (36) der ersten Schaltmittel (33) mit einem Eingang (59) der dritten Schaltmittel (58) gekoppelt ist, von denen ein erster Ausgang (60) und ein zweiter Ausgang (61) an die Eingänge des Speichers (42) bzw. des Verzögerungsmittels (43) gekoppelt ist, daß der Ausgang (49) der zweiten Schaltmittel (48) mit einen ersten Eingang (65) vierter Schaltmittel (64) gekoppelt ist, von denen ein zweiter Eingang (66) mit dem ersten Ausgang (60) der dritten Schaltmittel (58) gekoppelt ist, und daß ein Ausgang (67) der vierten Schaltmittel (64) mit der Ausgangsklemme (50) gekoppelt ist, daß die dritten Schaltmittel (58) zum Verbinden des Eingangs mit einem der Ausgänge unter dem Einfluß eines einem Steuereingang (62) der dritten Schaltmittel zugeführten vierten Steuersignals ausgelegt ist, daß die vierten Schaltmittel (64) zum Verbinden eines der Eingänge mit dem Ausgang unter dem Einfluß eines einem Steuereingang (68) der vierten Schaltmittel zugeführten fünften Steuersignals ausgelegt ist, und daß der Eingang (51) und der erste Ausgang (60) der dritten Schaltmittel (58) miteinander während des Lesens der zweiten Signalblöcke verbunden sind (Fig. 6).

26. Gerät nach Anspruch 23,24 oder 25 zum Durchführen des Verfahrens nach Anspruch 5, dadurch gekennzeichnet, daß der Speicher dazu ausgelegt ist, unter dem Einfluß des seinem Steuereingang zugeführten Steuersignals die x Zusatzsignale zu speichern, die im betreffenden aus der Spur ausgelesenen zweiten Signalblock (Blöcken) enthalten sind, und daß die zweiten Schaltmittel (48) derart ausgelegt sind, daß während den um das Zeitintervall T verzögerten Umschaltzeit der erste Eingang (46) mit dem Ausgang (49) verbunden ist.

27. Gerät nach Anspruch 23, 24 oder 25 zum Durchführen des Verfahrens nach Anspruch 7, dadurch gekennzeichnet, daß der Speicher dazu ausgelegt ist, unter dem Einfluß des seinem Steuereingang zugeführten Steuersignals die m Zusatzsignale zu speichern, die im betreffenden zweiten aus der Spur ausgelesenen Signalblock (Blöcken) enthalten sind, und daß die zweiten Schaltmittel derart ausgelegt sind, daß während eines Halbbildes der erste Eingang mit dem Ausgang für die Dauer der m Umschaltungen verbunden ist, die um das Zeitintervall T verzögert werden (Fig. 6).

28. Gerät nach Anspruch 25 oder 26 und 27 in Abhängigkeit vom Anspruch 25, wobei das in den zweiten Signalblöcken enthaltene Signal ein analoges Signal ist, dadurch gekennzeichnet, daß ein weiteres Verzögerungsmittel (74) zwischen dem ersten Ausgang (60) der dritten Schaltmittel (58) und dem ersten Eingang (66) vierter Schaltmittel (64) angeordnet ist, und dieses weitere Verzögerungsmittel eine Verzögerung bewirkt, die im wesentlichen gleich der Verzögerungszeit des erstgenannten Verzögerungsmittels (42) ist.

29. Gerät nach Anspruch 22 zum Durchführen des Verfahrens nach Anspruch 9, 12 oder 13, dadurch gekennzeichnet, daß wenigstens zum Zeitpunkt, zu dem der betreffende zweite Signalblock (Blöcke) gelesen wird (werden), ein Eingang des Speichers mit dem Ausgang der ersten Schaltmittel gekoppelt wird, und daß die zweiten Schaltmittel (48) zum Verbinden eines der Eingänge mit dem Ausgang unter dem Einfluß eines einem Steuereingang (53) der zweiten Schaltmittel zugef^Uhrten Steuersignals derart ausgelegt ist, daß der erste Eingang (47) mit dem Ausgang (49) zu dem Zeitpunkt verbunden wird, zu dem das Zusatzsignal in den betreffenden folgenden ersten Signalblock eingeführt wird Fig. 11, 12).

30. Gerät nach Anspruch 29 zum Durchführen des Verfahrens nach Anspruch 12, dadurch gekennzeichnet, daß der Speicher (42) dazu ausgelegt ist, die x im betreffenden aus der Spur ausgelesenen zweiten Signalblock (Blöcken) vorhandenen Zusatzsignale zu speichern, und daß der zweite Eingang (46) mit dem Ausgang (36) des ersten Schaltmittels (33) verbunden ist.

31. Gerät nach Anspruch 29 zum Durchführen des Verfahrens nach Anspruch 13, dadurch gekennzeichnet, daß der Speicher dazu ausgelegt ist, die m in dem betreffenden und aus der Spur ausgelesenen Signalblock (Blöcken) vorhandenen Zusatzsignale zu speichern, daß das Gerät außerdem ein Verzögerungsmittel (95), dritte Schaltmittel (100) und vierte Schaltmittel (98) enthält, daß der Ausgang (36) der ersten Schaltmittel (33) sowohl mit dem zweiten Eingang (46) der zweiten Schaltmittel (48) und mit einem Eingang des Verzögerungsmittels (95) gekoppelt ist, daß der Ausgang (44) des Speichers (42) mit einem ersten Eingang (102) der dritten Schaltmittel (100) gekoppelt ist, dessen Ausgang (103) mit dem ersten Eingang (47) der zweiten Schaltmittel (48) gekoppelt ist, und daß das Verzögerungsmittel (95) m Abzweige (96.1 ... 96.4) enthält, wobei jeder Abzweig mit einem zugeordneten Eingang (97.1 ... 97.4) der vierten Schaltmittel (98) gekoppelt ist, von denen ein Ausgang (99) mit dem zweiten Eingang (101) der dritten Schaltmittel (100) gekoppelt ist, und daß die dritten Schaltmittel (100) und die vierten Schaltmittel (98) zum Verbinden eines der Eingänge mit dem Ausgang unter dem Einfluß eines einem Steuereingang (104, 107) der dritten Schaltmittel bzw. der vierten Schaltmittel zugeführten Steuersignals ausgelegt sind (Fig. 11).

**32.** Gerät nach Anspruch 30 oder 31, dadurch gekennzeichnet, daß ein weiteres Verzögerungsmittel (110) vor dem zweiten Eingang (46) der zweiten Schaltmittel (48) angeordnet ist (Fig. 11).

**33.** Magnetischer Aufzeichnungsträger, der mit dem Verfahren nach Anspruch 1, 2, 3, 9, 10 oder 11 erzeugt wurde und ein Videosignal enthält, das eine Folge von Zeilen mit einem ersten ($F_i$) und einem zweiten Signalblock ($S_i$) in Spuren enthält, die in bezug auf die Längsrichtung des Aufzeichnungsträgers schräg angeordnet sind, dadurch gekennzeichnet, daß wenigstens ein zweites Signalblock ($S_n$) ein Zusatzsignal wenigstens eines ersten Signalblocks ($F_i$) des Halbbildes enthält.

FIG.1a

FIG.1c

FIG.1b

FIG.2a

FIG.2c

FIG.2b

FIG.3

FIG.4

FIG.5

FIG.6

FIG.7a

FIG.7c

FIG.7b

FIG.8a

FIG.8b

34

FIG.9

FIG.10

35

EP 0 232 940 B1

FIG.11

FIG.12